# EUROPEAN PATENT APPLICATION

(11) **EP 4 716 329 A1**
(43) Date of publication of application: **25.03.2026**
(21) Application number: 24822662.3
(22) Date of filing: 07.06.2024
(51) Int. Cl.: H04W 72/04

(54) **COMMUNICATION METHOD AND APPARATUS**

(30) Priority: 13.06.2023 CN 202310704250
(71) Applicant: Huawei Technologies Co., Ltd., Shenzhen, Guangdong 518129 (CN)
(72) Inventor: YU, Jian, Shenzhen, Guangdong 518129 (CN); HU, Mengshi, Shenzhen, Guangdong 518129 (CN); GAN, Ming, Shenzhen, Guangdong 518129 (CN)
(74) Representative: Pfenning, Meinig & Partner mbB
(86) International application number: PCT/CN2024/098214
(87) International publication number: WO 2024/255712

(57) **Abstract**

A communication method and apparatus applicable to the field of communication technologies are provided, for example, applied to a wireless local area network system that supports a next-generation Wi-Fi protocol of IEEE 802.11ax, for example, 802.11be, Wi-Fi 7, or EHT; a next generation of 802.11be, for example, 802.11bn, Wi-Fi 8, or UHR; and an 802.11 series protocol like the integrated millimeter wave (IMMW) protocol, and may be further applied to a UWB-based wireless personal area network system and a sensing (sensing) system. The communication method may include: A first communication apparatus generates a PPDU, and sends the PPDU. Then, a second communication apparatus receives the PPDU, and learns, based on the PPDU, that a transmission mode of the PPDU is a partial-bandwidth MU-MIMO transmission mode. According to the method, a throughput of a user is effectively improved, and transmission efficiency is improved.

## Description

This application claims priority to Chinese Patent Application No. 202310704250.2, filed with the China National Intellectual Property Administration on June 13, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A wireless local area network (wireless local area network, WLAN) technology is a wireless local area network technology created by the Wi-Fi Alliance according to the Institute of Electrical and Electronics Engineers (Institute of Electrical and Electronics Engineers, IEEE) 802.11 standard. To improve transmission efficiency of wireless communication, orthogonal frequency division multiple access (orthogonal frequency division multiple access, OFDMA) and multi-user multiple-input multiple-output (multi-user multiple-input multiple-output, MU-MIMO) technologies are introduced to the IEEE 802.11 standard.

Both the OFDMA and MU-MIMO technologies allow an access point (access point, AP) to simultaneously perform transmission with a plurality of users such as stations (station, STA) (for example, non-AP STAs), to reduce overheads of channel contention and a physical layer preamble, and improve a system throughput. For example, for an OFDMA transmission mode in the OFDMA technology, each user occupies a partial bandwidth of an entire PPDU. For an MU-MIMO transmission mode in the MU-MIMO technology, resource units (resource unit, RU) or multi-resource units (multiple resource unit, MRU) of a plurality of users are the same. When maximum supported bandwidths of different users are different, the foregoing transmission modes may reduce bandwidths, for transmission, of users with strong capabilities, which affects throughputs of the users.

Therefore, how to further improve transmission efficiency and improve a throughput of a user is urgent to be resolved.

### SUMMARY

Embodiments of this application provide a communication method and apparatus, to effectively improve transmission efficiency and improve a throughput of a user.

According to a first aspect, an embodiment of this application provides a communication method. The method may be applied to a first communication apparatus, and the first communication apparatus may be a Wi-Fi device (for example, an AP), a chip or a module in a Wi-Fi device, or the like. The method includes:
generating a physical (physical, PHY) layer protocol data unit (PHY layer protocol data unit, PPDU), where the PPDU corresponds to at least two target users, the at least two target users include a first user and a second user, the first user performs multi-user multiple-input multiple-output MU-MIMO transmission with the second user over a first bandwidth, and the first bandwidth is a partial bandwidth of a bandwidth used by the first user for data transmission; and sending the PPDU.

In embodiments of this application, the first user may perform MU-MIMO transmission with the second user over the partial bandwidth (namely, a first bandwidth), and the first user may further perform data transmission over a bandwidth other than the partial bandwidth of the bandwidth used by the first user for data transmission. This does not affect a bandwidth range for transmission by the first user, improves a throughput of the first user, improves transmission efficiency, and improves a throughput of an entire system.

According to a second aspect, an embodiment of this application provides a communication method. The method may be applied to a second communication apparatus, and the first communication apparatus may be a Wi-Fi device (for example, a non-AP STA or an AP), a chip or a module in a Wi-Fi device, or the like. The method includes:
receiving a physical layer protocol data unit PPDU, where the PPDU corresponds to at least two target users, the at least two target users include a first user and a second user, the first user performs multi-user multiple-input multiple-output MU-MIMO transmission with the second user over a first bandwidth, and the first bandwidth is a partial bandwidth of a bandwidth used by the first user for data transmission; and parsing the PPDU.

With reference to the second aspect, in a possible implementation, the parsing the PPDU includes:
parsing a universal signaling (universal SIG, U-SIG) field in the PPDU, and identifying that a transmission mode of the PPDU is a partial-bandwidth MU-MIMO transmission mode; and parsing a first SIG field in the PPDU, to obtain at least one of a size and a location of the first bandwidth, and identifying, based on a user identifier, a user field that corresponds to the user identifier and that is in the first SIG field, and that a user type corresponding to the user identifier is a full-bandwidth user or a partial-bandwidth user.

With reference to the first aspect or the second aspect, in a possible implementation, the PPDU includes the universal signaling U-SIG field, the U-SIG field includes first indication information, and the first indication information indicates that the transmission mode of the PPDU is the partial-bandwidth MU-MIMO transmission mode.

In embodiments of this application, the first indication information in the U-SIG field explicitly indicates that the transmission mode of the PPDU is the partial-bandwidth MU-MIMO transmission mode, so that the second communication apparatus can effectively learn of the transmission mode of the PPDU received by the second communication apparatus to correctly parse the PPDU.

With reference to the first aspect or the second aspect, in a possible implementation, the first indication information is carried in a PPDU type and compression mode field in the U-SIG field.

With reference to the first aspect or the second aspect, in a possible implementation, the PPDU includes the first signaling SIG field, the first SIG field includes second indication information, and the second indication information indicates at least one of the size and the location of the first bandwidth.

With reference to the first aspect or the second aspect, in a possible implementation, the second indication information includes a first bitmap, 1 bit in the first bitmap corresponds to one unit bandwidth, and a size of the unit bandwidth is less than or equal to the size of the first bandwidth.

In embodiments of this application, the first bitmap indicates the size and the location of the first bandwidth, so that the target user can clearly learn of the size and the location of the first bandwidth. This is more flexible.

With reference to the first aspect or the second aspect, in a possible implementation, the second indication information includes 1 bit, and the 1 bit indicates that the size of the first bandwidth is 80 MHz or 160 MHz.

In embodiments of this application, the 1 bit or a plurality of bits indicate the size of the first bandwidth, to effectively reduce overheads.

With reference to the first aspect or the second aspect, in a possible implementation, the location of the first bandwidth is primary 80 MHz or primary 160 MHz, or the location of the first bandwidth is preset.

With reference to the first aspect or the second aspect, in a possible implementation, the second indication information includes at least 1 bit, and the at least 1 bit indicates a resource unit RU or multi-resource unit MRU corresponding to the first bandwidth.

With reference to the first aspect or the second aspect, in a possible implementation, the second indication information is carried in a resource unit allocation field, and the resource unit allocation field indicates the size and the location of the first bandwidth.

With reference to the first aspect or the second aspect, in a possible implementation, the first SIG field further includes user type indication information, and the user type indication information indicates that a user type of the target user is a full-bandwidth user or a partial-bandwidth user.

With reference to the first aspect or the second aspect, in a possible implementation, the at least two target users further include a third user, the first user performs MU-MIMO transmission with the third user over a second bandwidth, and the second bandwidth is a partial bandwidth of the bandwidth used by the first user for data transmission other than the first bandwidth.

With reference to the first aspect or the second aspect, in a possible implementation, the PPDU includes the first signaling SIG field, the first SIG field includes third indication information, and the third indication information indicates at least one of a size and a location of the second bandwidth.

With reference to the first aspect or the second aspect, in a possible implementation, the first user corresponds to one user field on the first bandwidth and one user field on the second bandwidth.

With reference to the first aspect or the second aspect, in a possible implementation, the first SIG field includes at least two user field groups, the user field group includes at least two user fields, and target users corresponding to the at least two user fields in the user field group perform MU-MIMO transmission over a same bandwidth.

With reference to the first aspect or the second aspect, in a possible implementation, the at least two user field groups are arranged in ascending order of frequencies, and the at least two user fields in the user field group are arranged in descending order of numbers of spatial streams.

In embodiments of this application, when there are a plurality of partial bandwidths, the user fields are grouped, so that a full-bandwidth user can use different numbers of spatial streams and/or different modulation and coding schemes (modulation and coding scheme, MCS) and the like in different partial bandwidths. This helps adapt to a channel and improve a throughput.

With reference to the first aspect or the second aspect, in a possible implementation, the first SIG field further includes information indicating a number of partial bandwidths or information indicating a number of user field groups.

With reference to the first aspect or the second aspect, in a possible implementation, the first SIG field further includes information indicating a number of users performing MU-MIMO transmission over the partial bandwidth.

With reference to the first aspect or the second aspect, in a possible implementation, the user type indication information includes a second bitmap, a length of the second bitmap is equal to M, and M is a total number of target users or M is a total number of user fields included in the first SIG field.

With reference to the first aspect or the second aspect, in a possible implementation, the first SIG field includes an ultra-high reliability (ultra-high reliability, UHR)-SIG field or an integrated millimeter wave (integrated millimeter wave, IMMW)-SIG field.

According to a third aspect, an embodiment of this application provides a communication method. The method may be applied to a first communication apparatus, and the first communication apparatus may be a Wi-Fi device (for example, an AP), a chip or a module in a Wi-Fi device, or the like. The method includes:
sending a trigger frame, where the trigger frame includes a common information field, the common information field includes transmission mode indication information, and the transmission mode indication information indicates that a transmission mode of a trigger-based physical layer protocol data unit PPDU (trigger-based PPDU, TB PPDU) is a partial-bandwidth MU-MIMO transmission mode; and receiving the PPDU, where a transmission mode of the PPDU is the partial-bandwidth MU-MIMO transmission mode, the PPDU corresponds to at least two target users, the at least two target users include a first user and a second user, the first user performs multi-user multiple-input multiple-output MU-MIMO transmission with the second user over a first bandwidth, and the first bandwidth is a partial bandwidth of a bandwidth used by the first user for data transmission.

In embodiments of this application, in the transmission mode of the trigger-based PPDU, the partial-bandwidth MU-MIMO transmission mode is used, to effectively improve a throughput of a user, improve transmission efficiency, and improve a throughput of an entire system.

According to a fourth aspect, an embodiment of this application provides a communication method. The method may be applied to a second communication apparatus, and the first communication apparatus may be a Wi-Fi device (for example, a non-AP STA), a chip or a module in a Wi-Fi device, or the like. The method includes:
receiving a trigger frame, where the trigger frame includes a common information field, the common information field includes transmission mode indication information, and the transmission mode indication information indicates that a transmission mode of a trigger-based physical layer protocol data unit PPDU is a partial-bandwidth MU-MIMO transmission mode; and
sending the PPDU, where a transmission mode of the PPDU is the partial-bandwidth MU-MIMO transmission mode, the PPDU corresponds to at least two target users, the at least two target users include a first user and a second user, the first user performs multi-user multiple-input multiple-output MU-MIMO transmission with the second user over a first bandwidth, and the first bandwidth is a partial bandwidth of a bandwidth used by the first user for data transmission.

With reference to the fourth aspect, in a possible implementation, the method further includes:
determining, based on the trigger frame, a modulation and coding scheme MCS used by the target user; and/or
determining, based on the trigger frame, a resource unit RU or multi-resource unit MRU used by the target user for data transmission.

With reference to the third aspect or the fourth aspect, in a possible implementation, the PPDU includes a universal signaling U-SIG field, the U-SIG field includes first indication information, and the first indication information indicates that the transmission mode of the trigger-based PPDU is the partial-bandwidth MU-MIMO transmission mode.

With reference to the third aspect or the fourth aspect, in a possible implementation, the first indication information is carried in a PPDU type and compression mode field in the U-SIG field.

With reference to the third aspect or the fourth aspect, in a possible implementation, the trigger frame further includes a user information list field, the user information list field includes one or more user information fields, and the user information field includes at least one of a resource unit allocation field, a spatial configuration field, and a random access RU information field.

According to a fifth aspect, an embodiment of this application provides a first communication apparatus, configured to perform the method in the first aspect, the third aspect, or any possible implementation. The first communication apparatus includes a unit that performs the method in the first aspect, the third aspect, or any possible implementation.

According to a sixth aspect, an embodiment of this application provides a second communication apparatus, configured to perform the method in the second aspect, the fourth aspect, or any possible implementation. The second communication apparatus includes a unit that performs the method in the second aspect, the fourth aspect, or any possible implementation.

According to a seventh aspect, an embodiment of this application provides a first communication apparatus. The first communication apparatus includes a processor configured to perform the method in the first aspect, the third aspect, or any possible implementation. The processor is configured to execute a program stored in a memory. When the program is executed, the method in the first aspect, the third aspect, or any possible implementation is performed.

In a possible implementation, the memory is located outside the first communication apparatus.

In a possible implementation, the memory is located inside the first communication apparatus.

In this embodiment of this application, the processor and the memory may alternatively be integrated into one component. In other words, the processor and the memory may alternatively be integrated together. For example, the first communication apparatus may be a chip.

In a possible implementation, the first communication apparatus further includes a transceiver. The transceiver is configured to receive or send information.

According to an eighth aspect, an embodiment of this application provides a second communication apparatus. The second communication apparatus includes a processor configured to perform the method in the second aspect, the fourth aspect, or any possible implementation. The processor is configured to execute a program stored in a memory. When the program is executed, the method in the second aspect, the fourth aspect, or any possible implementation is performed.

In a possible implementation, the memory is located outside the second communication apparatus.

In a possible implementation, the memory is located inside the second communication apparatus.

In this embodiment of this application, the processor and the memory may alternatively be integrated into one component. In other words, the processor and the memory may alternatively be integrated together. For example, the second communication apparatus may be a chip.

In a possible implementation, the second communication apparatus further includes a transceiver. The transceiver is configured to receive or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method in the first aspect, the third aspect, or any possible implementation.

In a possible implementation, that the interface is configured to output the information includes: The interface is configured to output a PPDU. For example, the logic circuit is configured to generate the PPDU.

In a possible implementation, that the interface is configured to output the information includes: The interface is configured to output a trigger frame. That the interface is configured to input the information includes: The interface is configured to input a PPDU. For example, the logic circuit is configured to generate the trigger frame. For example, the logic circuit is configured to parse the PPDU.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method in the second aspect, the fourth aspect, or any possible implementation.

In a possible implementation, that the interface is configured to input the information includes: The interface is configured to input a PPDU. For example, the logic circuit is configured to parse the PPDU.

In a possible implementation, that the interface is configured to input the information includes: The interface is configured to input a trigger frame. That the interface is configured to output the information includes: The interface is configured to output a PPDU. For example, the logic circuit is configured to parse the trigger frame. For example, the logic circuit is configured to generate the PPDU.

According to an eleventh aspect, an embodiment of this application provides a computer-readable storage medium. The computer-readable storage medium is configured to store a computer program, and when the computer program is run on a computer, the method in the first aspect, the second aspect, the third aspect, the fourth aspect, or any possible implementation is performed.

According to a twelfth aspect, an embodiment of this application provides a computer program product. The computer program product includes a computer program or computer code, and when the computer program product runs on a computer, the method in the first aspect, the second aspect, the third aspect, the fourth aspect, or any possible implementation is performed.

According to a thirteenth aspect, an embodiment of this application provides a computer program. When the computer program is run on a computer, the method in the first aspect, the second aspect, the third aspect, the fourth aspect, or any possible implementation is performed.

According to a fourteenth aspect, an embodiment of this application provides a communication system. The communication system includes a first communication apparatus and a second communication apparatus.

In a possible implementation, the first communication apparatus is configured to perform the method in the first aspect or any possible implementation of the first aspect, and the second communication apparatus is configured to perform the method in the second aspect or any possible implementation of the second aspect.

In another possible implementation, the first communication apparatus is configured to perform the method in the third aspect or any possible implementation of the third aspect, and the second communication apparatus is configured to perform the method in the fourth aspect or any possible implementation of the fourth aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3a and FIG. 3b are diagrams of a partial-bandwidth MU-MIMO transmission mode according to an embodiment of this application;
FIG. 3c FIG. 3d are diagrams of another partial-bandwidth MU-MIMO transmission mode according to an embodiment of this application;
FIG. 4a is a diagram of a downlink (downlink, DL) non-MU-MIMO (non-MU-MIMO) OFDMA transmission mode according to an embodiment of this application;
FIG. 4b is a diagram of a DL OFDMA+MU-MIMO transmission mode according to an embodiment of this application;
FIG. 4c is a diagram of a single-user (single user, SU) or channel sounding null data packet (sounding null data packet, sounding NDP) transmission mode according to an embodiment of this application;
FIG. 4d is a diagram of a DL non-OFDMA MU-MIMO transmission mode according to an embodiment of this application;
FIG. 5a is a diagram of a process of generating a PPDU according to an embodiment of this application;
FIG. 5b is a diagram of a process of parsing a PPDU according to an embodiment of this application;
FIG. 6a is a diagram of a format of a UHR PPDU according to an embodiment of this application;
FIG. 6b is a diagram of a format of an IMMW PPDU according to an embodiment of this application;
FIG. 7a is a diagram of a partial-bandwidth MU-MIMO transmission mode of a UHR PPDU according to an embodiment of this application;
FIG. 7b is a diagram of a format of a first SIG field according to an embodiment of this application;
FIG. 8a is a diagram of a partial-bandwidth MU-MIMO transmission mode of a UHR PPDU according to an embodiment of this application;
FIG. 8b is a diagram of a format of a first SIG field according to an embodiment of this application;
FIG. 9a is a schematic flowchart of another communication method according to an embodiment of this application;
FIG. 9b is a diagram of a scenario of a communication method according to an embodiment of this application;
FIG. 10a is a diagram of a format of a trigger frame according to an embodiment of this application;
FIG. 10b is a diagram of a format of a UHR TB PPDU according to an embodiment of this application;
FIG. 10c is a diagram of a format of an IMMW TB PPDU according to an embodiment of this application;
FIG. 11 is a diagram of a partial-bandwidth MU-MIMO transmission mode of a trigger-based PPDU according to an embodiment of this application;
FIG. 12 is a diagram of a structure of a communication apparatus according to an embodiment of this application;
FIG. 13a and FIG. 13b are diagrams of structures of communication apparatuses according to an embodiment of this application; and
FIG. 14 is a diagram of a structure of a communication apparatus according to an embodiment of this application.

### DESCRIPTION OF EMBODIMENTS

For ease of understanding technical solutions in this application, this application is further described below with reference to accompanying drawings.

In the specification, claims, and the accompanying drawings of this application, terms such as "first" and "second" are only intended to distinguish between different objects but do not describe a particular order. In addition, the terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with other embodiment.

In this application, "at least one" means one or more, "a plurality of" means two or more, "at least two" means two or three or more. "And/or" is for describing an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" usually indicates an "or" relationship between the associated objects. "At least one of the following items (pieces)" or a similar expression thereof means any combination of these items. For example, at least one of a, b, or c may represent: a, b, c, "a and b", "a and c", "b and c", or "a, b, and c".

Embodiments of this application provide a communication method and apparatus, to effectively improve transmission efficiency, improve a throughput of a user, and improve a throughput of a system.

The following describes a communication system in embodiments of this application.

The technical solutions provided in embodiments of this application may be applied to a WLAN system, for example, Wi-Fi. For example, the method provided in embodiments of this application is applicable to the IEEE 802.11 series protocols, for example, the 802.11a/b/g protocol (for example, the 802.11bf protocol), the 802.11n protocol, the 802.11ac protocol, the 802.11ax protocol, the 802.11be protocol, the 802.11bn protocol or a next-generation protocol, and the IMMW protocol. Examples are not enumerated. The technical solutions provided in embodiments of this application may be further applied to a wireless personal area network (wireless personal area network, WPAN) based on an ultra-wideband (ultra-wideband, UWB) technology. For example, the method provided in embodiments of this application is applicable to the IEEE 802.15 series protocols, for example, the 802.15.4a protocol, the 802.15.4z protocol, the 802.15.4ab protocol, or a future generation UWB WPAN protocol. Examples are not enumerated. The technical solutions provided in embodiments of this application may be further applied to the following communication systems: for example, an Internet of things (Internet of things, IoT) system, a vehicle-to-everything (vehicle to X, V2X) system, a narrowband Internet of things (narrowband Internet of things, NB-IoT) system, a long term evolution (long term evolution, LTE) system, a 5th generation (5th-generation, 5G) communication system, and a new communication system that emerges in future communication development.

The WLAN system can provide high-speed and low-latency transmission. With continuous evolution of WLAN application scenarios, the WLAN system is to be applied to more scenarios or industries, for example, the Internet of things industry, the vehicle-to-everything industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an Internet of things node, an entertainment terminal (for example, a wearable device like augmented reality (augmented reality, AR) or virtual reality (virtual reality, VR)), an intelligent device (for example, a printer, a projector, a loudspeaker, or a speaker) in intelligent offices, a vehicle-to-everything device in vehicle-to-everything, an infrastructure in a daily life scenario (for example, a vending machine, a self-service navigation console of a shopping mall/supermarket, a self-service cashier device, and a self-service ordering machine), a device in a large sports and music venue, and the like. For example, the access point and the station may be devices used in vehicle-to-everything, Internet of things nodes, sensors, or the like in Internet of things (Internet of things, IoT), smart cameras, smart remote controls, smart water or electricity meters, or the like in a smart home, or sensors in a smart city.

Although embodiments of this application mainly use a WLAN as an example, especially a network applied to the IEEE 802.11 series standards, for example, a system supporting Wi-Fi 7 that may also be referred to as extremely high throughput (extremely high-throughput, EHT), a system supporting Wi-Fi 8 that may also be referred to as ultra-high reliability (ultra-high reliability, UHR) or ultra-high reliability and throughput (ultra-high reliability and throughput, UHRT), or a system supporting an IMMW, a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

The method provided in embodiments of this application may be implemented by a communication apparatus in a communication system. For example, the communication apparatus may be an access point (access point, AP) or a station (station, STA).

The access point is an apparatus having a wireless communication function, supports communication or sensing according to a WLAN protocol, has a function of communicating with or sensing another device (for example, a station or another access point) in a WLAN network, and certainly may also have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having a wireless communication function may be an entire device, or may be a chip, a processing system, or a module installed in an entire device. The device in which the chip, the processing system, or the module is installed may implement a method, a function, and the like in embodiments of this application under control of the chip, the processing system, or the module. The AP in embodiments of this application is an apparatus that provides a service for the STA, and may support the 802.11 series protocols, subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in these devices in various forms, to implement the method and the function in embodiments of this application.

The station is an apparatus having a wireless communication function, supports communication or sensing according to the WLAN protocol, and has a capability of communicating with or sensing another station or access point in the WLAN network. In a WLAN system, the station may be referred to as a non-access point station (non-access point station, non-AP STA). For example, the STA is any user communication device that allows a user to communicate with or sense an AP and further communicate with a WLAN. The apparatus having a wireless communication function may be an entire device, or may be a chip, a processing system, or a module installed in an entire device. A device in which the chip, the processing system, or the module is installed may implement the method, the function, and the like in embodiments of this application under control of the chip, the processing system, or the module. For example, the station may be a wireless communication chip, a wireless sensor, or a wireless communication terminal, and may also be referred to as a user. For another example, the station may be a mobile phone, a tablet computer, a set-top box, a smart television, a smart wearable device, a vehicle-mounted communication device, a computer, or the like supporting a Wi-Fi communication function. Certainly, the STA may alternatively be a chip, a processing system, or a module in these devices in various forms, to implement the method and the function in embodiments of this application.

For example, a communication system to which the method provided in embodiments of this application may be applied may include an access point and a station. For example, embodiments of this application are applicable to data communication or sensing between one or more APs and one or more STAs in the WLAN, and are also applicable to communication or sensing between APs and communication or sensing between STAs. For example, the AP may communicate with or sense a single STA, or the AP may simultaneously communicate with or sense a plurality of STAs. For example, communication or sensing between the AP and the plurality of STAs may further be classified into downlink transmission in which the AP simultaneously sends signals to the plurality of STAs, and uplink transmission in which the plurality of STAs send signals to the AP. The AP and the STA may support WLAN communication protocols. The communication protocols may include the IEEE 802.11 series protocols, for example, is applicable to the 802.11n/802.11ac/802.11ax/802.11be/802.11bn/IMMW standard, and certainly is also applicable to a standard later than the 802.11bn standard.

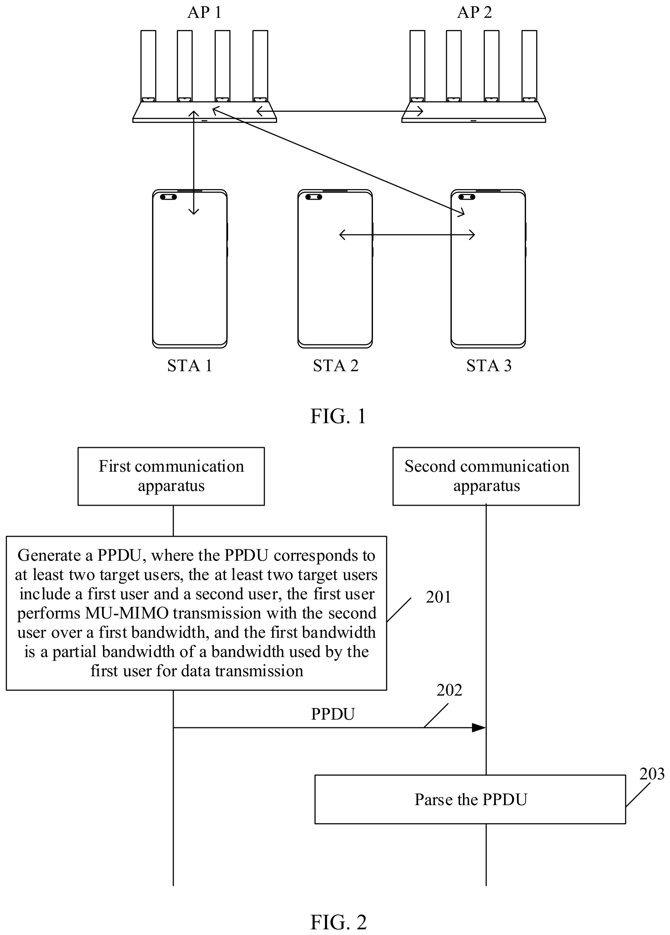

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA 3. A method provided in embodiments of this application is applicable to data communication between one AP and one or more STAs (for example, communication between the AP 1 and the STA 1 or communication between the AP 1 and the STA 1 and the STA 2 shown in FIG. 1), communication between APs (for example, communication between the AP 1 and the AP 2 shown in FIG. 1), or communication between STAs (for example, communication between the STA 2 and the STA 3 shown in FIG. 1).

FIG. 1 is described by using an example in which the STA is a mobile phone and the AP is a router. This does not indicate a limitation on types of the AP and the STA in embodiments of this application. In addition, FIG. 1 shows only two APs and three STAs as an example. There may be more or less APs or STAs. This is not limited in embodiments of this application.

In an example, a first communication apparatus and a second communication apparatus may be Wi-Fi chips, modules, or processing systems disposed in different Wi-Fi devices. In another example, the first communication apparatus may be an AP, and the second communication apparatus may be a STA. In still another example, both the first communication apparatus and the second communication apparatus may be STAs or APs. In still another example, the first communication apparatus may be a STA, and the second communication apparatus may be an AP. In still another example, at least one of the first communication apparatus and the second communication apparatus may be a multi-link device (multi-link device, MLD). Examples are not enumerated in embodiments of this application. For ease of description, in specific examples in the following, the first communication apparatus is an AP and the second communication apparatus is a STA. However, this should not be understood as a limitation on embodiments of this application.

In embodiments of this application, the method provided in embodiments of this application is described from two sides: the first communication apparatus and the second communication apparatus. However, in a process in which the first communication apparatus and the second communication apparatus transmit a PPDU, the PPDU may further be forwarded by using another apparatus, for example, a PPDU between the first communication apparatus and the second communication apparatus is forwarded by using a forwarding apparatus. An apparatus other than the first communication apparatus and the second communication apparatus is not limited in embodiments of this application.

The following describes a communication method in embodiments of this application.

FIG. 2 is a schematic flowchart of a communication method according to an embodiment of this application. As shown in FIG. 2, the method includes the following steps.

201: A first communication apparatus generates a PPDU, where the PPDU corresponds to at least two target users, the at least two target users include a first user and a second user, the first user performs MU-MIMO transmission with the second user over a first bandwidth, and the first bandwidth is a partial bandwidth of a bandwidth used by the first user for data transmission.

In this embodiment of this application, the PPDU carries a physical layer service data unit (physical layer service data unit, PSDU) that needs to be transmitted to the at least two target users, or the PPDU carries a PSDU that needs to be sent by the first communication apparatus to the at least two target users, or the at least two target users need to receive respective PSDUs from the PPDU. For example, a second communication apparatus may be one of the at least two target users. For example, the second communication apparatus may be a non-AP STA.

For example, the bandwidth used by the first user for data transmission may be a bandwidth of the PPDU (for example, referred to as a PPDU bandwidth for short in the following) or an entire bandwidth of the PPDU. For example, the bandwidth used by the first user for data transmission may be referred to as a full bandwidth or a large bandwidth of the PPDU, or a bandwidth used to transmit the PPDU. Certainly, when a preamble is punctured, the bandwidth used by the first user for data transmission may be a punctured bandwidth. The first bandwidth may be a bandwidth used by the first user for data transmission, or the first bandwidth may be a bandwidth used to transmit data of the first user. For example, the first bandwidth may be a partial bandwidth indicated by first indication information in a U-SIG field of the PPDU.

The partial bandwidth may be a bandwidth, in the PPDU bandwidth, over which the first user and another user can perform MU-MIMO transmission. The PPDU bandwidth may include one or more partial bandwidths. The first user may perform MU-MIMO transmission with different target users over the partial bandwidths. For example, the plurality of partial bandwidths do not overlap. For example, the partial bandwidths of the PPDU bandwidth include the first bandwidth, and the first user may perform MU-MIMO transmission with the second user over the first bandwidth. For another example, the partial bandwidths of the PPDU bandwidth include the first bandwidth and a second bandwidth, and the first bandwidth does not overlap the second bandwidth. The first user may perform MU-MIMO transmission with the second user over the first bandwidth, and the first user may perform MU-MIMO transmission with a third user over the second bandwidth. The rest may be deduced by analogy. For more numbers of partial bandwidths, examples are not enumerated herein. It may be understood that the first user performing MU-MIMO transmission with different target users over the partial bandwidths in this embodiment of this application may also be referred to as that the first user performs partial-bandwidth MU-MIMO transmission with different target users over the partial bandwidths.

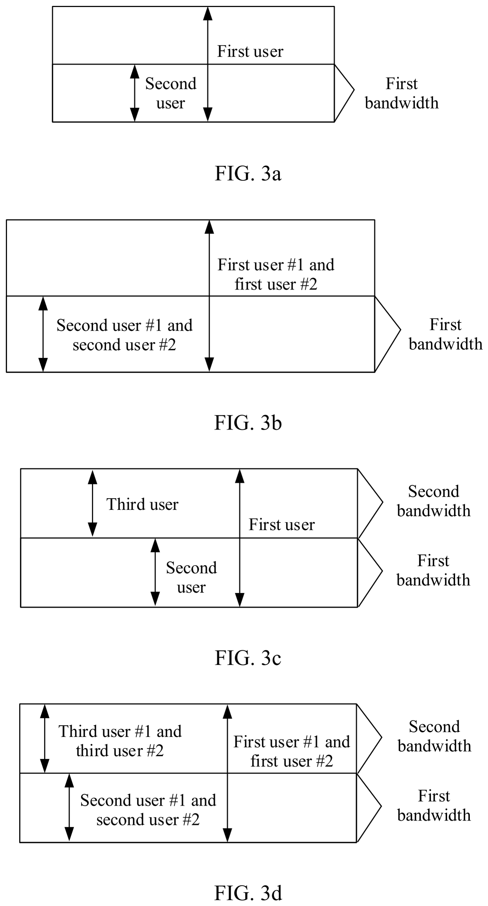

From different dimensions of supported bandwidths, the first user may be referred to as a full-bandwidth user, a large-bandwidth user, a user with a large bandwidth capability, or the like. The second user (including a second user #1 and a second user #2 shown in FIG. 3b and FIG. 3d) or the third user (including a third user #1 and a third user #2 shown in FIG. 3d) may be referred to as a partial-bandwidth user, a narrowband user, a user with a narrowband capability, or the like. The partial-bandwidth user may be a user that can perform MU-MIMO transmission with the first user over the partial bandwidth supported by the first user. In embodiments of this application, the first user, the second user, and the third user are used as an example to distinguish between different target users. During specific implementation, different target users may not be distinguished by names, or different target users may be distinguished in another manner. Certainly, the target user may also be referred to as a user. This is not limited in embodiments of this application.

For example, MU-MIMO may be a technology. In the technology, a plurality of STAs (for example, a plurality of non-AP STAs or a plurality of AP STAs) each have one or more antennas, and simultaneously send independent PSDUs to a single STA (for example, an AP STA) or simultaneously receive independent PSDUs from a single STA over a same subcarrier. For specific descriptions of MU-MIMO, refer to a related standard. This is not limited in embodiments of this application. According to embodiments of this application, the first user and the second user may simultaneously receive independent PSDUs over subcarriers of the first bandwidth. A number of subcarriers of the first bandwidth may be determined based on a size and a subcarrier spacing of the first bandwidth. The PSDU of the first user is transmitted over a full bandwidth, and the first user receives a part of the PSDU over the first bandwidth.

A transmission mode of the PPDU shown in embodiments of this application may be referred to as a partial-bandwidth MU-MIMO transmission mode, a partial MU-MIMO transmission mode, a hybrid-bandwidth MU-MIMO transmission mode, or the like. A specific name of the transmission mode of the PPDU shown in embodiments of this application is not limited in embodiments of this application. For ease of description, the following uses the partial-bandwidth MU-MIMO transmission mode as an example to describe the method in embodiments of this application.

For example, partial-bandwidth MU-MIMO may be a technology. In the technology, a plurality of STAs (for example, a plurality of non-AP STAs or a plurality of AP STAs) each have one or more antennas, and simultaneously send independent PSDUs to a single STA (for example, an AP STA) or simultaneously receive independent PSDUs from a single STA over partial subcarriers that overlap. The partial subcarriers may be some subcarriers in all subcarriers used by one of the plurality of STAs for data transmission. The PSDU of the first user is transmitted over a full bandwidth, and the first user receives a part of the PSDU over the first bandwidth.

In embodiments of this application, although the full-bandwidth user and the partial-bandwidth user support different bandwidths, the full-bandwidth user may still perform MU-MIMO transmission with the partial-bandwidth user over a partial bandwidth, and the full-bandwidth user may further perform data transmission over a bandwidth other than the foregoing partial bandwidth. Therefore, when the full-bandwidth user and the partial-bandwidth user support different bandwidths, the full-bandwidth user may not reduce a bandwidth range of the full-bandwidth user for transmission, to ensure that a throughput of the full-bandwidth user is not affected by multi-user transmission, and further improve the throughput of the full-bandwidth user.

For example, FIG. 3a and FIG. 3b are diagrams of a partial-bandwidth MU-MIMO transmission mode according to an embodiment of this application. FIG. 3a and FIG. 3b each show an example in which the PPDU bandwidth includes one partial bandwidth. Two differences lie between FIG. 3a and FIG. 3b. In a first difference, there is one full-bandwidth user: the first user on the entire bandwidth of the PPDU in FIG. 3a. In this case, one user (namely, the first user) performs single-user transmission over the entire bandwidth of the PPDU other than the first bandwidth. In FIG. 3b, the entire bandwidth of the PPDU includes two full-bandwidth users: a first user #1 and a first user #2. For example, the first user #1 and the first user #2 may perform MU-MIMO transmission over a bandwidth of the PPDU bandwidth other than the first bandwidth. In a second difference, there is one partial-bandwidth user: the second user on the first bandwidth in FIG. 3a, and there are two partial-bandwidth users: the second user #1 and the second user #2 on the first bandwidth in FIG. 3b.

As shown in FIG. 3a, the first user may perform MU-MIMO transmission with the second user over the first bandwidth. As shown in FIG. 3b, the first user #1 and the first user #2 may respectively perform MU-MIMO transmission with the second user #1 or the second user #2 over the first bandwidth. Numbers of users shown in FIG. 3a and FIG. 3b are merely examples, and the numbers of users shown in FIG. 3a and FIG. 3b should not be understood as a limitation on embodiments of this application.

For another example, FIG. 3c and FIG. 3d are diagrams of another partial-bandwidth MU-MIMO transmission mode according to an embodiment of this application. FIG. 3c and FIG. 3d each show an example in which the PPDU bandwidth includes two partial bandwidths. For descriptions of differences between FIG. 3c and FIG. 3d, refer to the descriptions of FIG. 3a and FIG. 3b. Details are not described herein again.

As shown in FIG. 3c, the partial bandwidth of the PPDU bandwidth includes the first bandwidth and the second bandwidth. The first user performs MU-MIMO transmission with the second user over the first bandwidth, and the first user performs MU-MIMO transmission with the third user over the second bandwidth. As shown in FIG. 3d, the first user #1 and the first user #2 respectively perform MU-MIMO transmission with the second user #1 or the second user #2 over the first bandwidth. The first user #1 and the first user #2 respectively perform MU-MIMO transmission with the third user #1 or the third user #2 over the second bandwidth.

Numbers of partial bandwidths, numbers of first users, and numbers of second users shown in FIG. 3a to FIG. 3d are merely examples. During specific implementation, the number of partial bandwidths may be three, four, or the like. Examples are not enumerated in embodiments of this application.

202: The first communication apparatus sends the PPDU, and correspondingly, the second communication apparatus receives the PPDU.

203: The second communication apparatus parses the PPDU.

In embodiments of this application, the first user may perform MU-MIMO transmission with the second user over the partial bandwidth, and the first user may further perform data transmission over a bandwidth other than the partial bandwidth of the PPDU bandwidth. This does not affect a bandwidth range for transmission by the first user, improves a throughput of the first user, improves transmission efficiency, and improves a throughput of an entire system.

In addition to the partial-bandwidth MU-MIMO transmission mode shown in this embodiment of this application, PPDU transmission modes further include the following transmission modes:

In an OFDMA mode, a PPDU bandwidth is divided into more than one RU or MRU. The RU or MRU may be allocated to one user, or may be allocated to a plurality of users. Further allocation of one RU or MRU to the plurality of users is referred to as an OFDMA+MU-MIMO transmission mode. Allocation of one RU or MRU to one user is referred to as non-MU-MIMO OFDMA.

In an SU or channel sounding NDP transmission mode, a PPDU is transmitted to one user. Transmission to the user may also be broadcast or multi-wave transmission.

In a non-OFDMA MU-MIMO transmission mode, one RU or MRU is present in a PPDU bandwidth, and is uniformly allocated to more than one user.

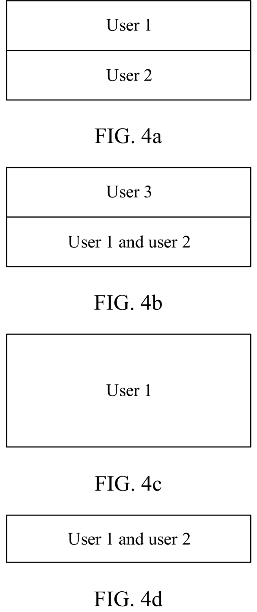

FIG. 4a is a diagram of a downlink (downlink, DL) non-MU-MIMO OFDMA transmission mode according to an embodiment of this application. In the OFDMA mode, neither a user 1 nor a user 2 can occupy the entire bandwidth of the PPDU, that is, the user 1 and the user 2 occupy a partial bandwidth of the PPDU. In embodiments of this application, compared with the DL non-MU-MIMO OFDMA transmission mode, the partial-bandwidth MU-MIMO transmission mode, provided in embodiments of this application, used by the user 1 and the user 2 can effectively improve a throughput of the user 1 and improve a total throughput of the AP.

FIG. 4b is a diagram of a DL OFDMA+MU-MIMO transmission mode according to an embodiment of this application. An RU or MRU used by the user 1 for MU-MIMO transmission and an RU or MRU used by the user 2 for MU-MIMO transmission are the same, and the user 1 (or the user 2) and a user 3 cannot occupy the entire bandwidth of the PPDU. In embodiments of this application, compared with the DL OFDMA+MU-MIMO transmission mode, the partial-bandwidth MU-MIMO transmission mode provided in embodiments of this application can effectively improve the throughput of the user 1, for example, when the user 1 and the user 2 perform MU-MIMO transmission over the partial bandwidth, and the user 1 and the user 3 perform MU-MIMO transmission over another partial bandwidth (or the user 3, the user 2, and the user 1 simultaneously perform MU-MIMO transmission over the partial bandwidth). In comparison with the transmission mode shown in FIG. 4b, if total throughputs are the same, the AP can schedule more users in the partial-bandwidth MU-MIMO transmission mode. For example, based on FIG. 3a, the AP may further schedule more users such as the user 3, to further improve the throughput.

FIG. 4c is a diagram of an SU or channel sounding NDP transmission mode according to an embodiment of this application. In embodiments of this application, compared with the SU or channel sounding NDP transmission mode, the partial-bandwidth MU-MIMO transmission mode provided in embodiments of this application effectively improves the total throughput of the AP and reduces a delay of the user 2. For example, the user 2 and the user 1 may perform MU-MIMO transmission over the partial bandwidth. Therefore, the AP schedules the user 2 in advance, to reduce the delay of the user 2.

FIG. 4d is a diagram of a DL non-OFDMA MU-MIMO transmission mode according to an embodiment of this application. In embodiments of this application, compared with the DL non-OFDMA MU-MIMO transmission mode, the partial-bandwidth MU-MIMO transmission mode provided in embodiments of this application effectively improves the throughput of the user 1 and improves the total throughput of the AP.

The following describes a manner in which the first communication apparatus generates the PPDU and a manner in which the second communication apparatus parses the PPDU in the method shown in FIG. 2.

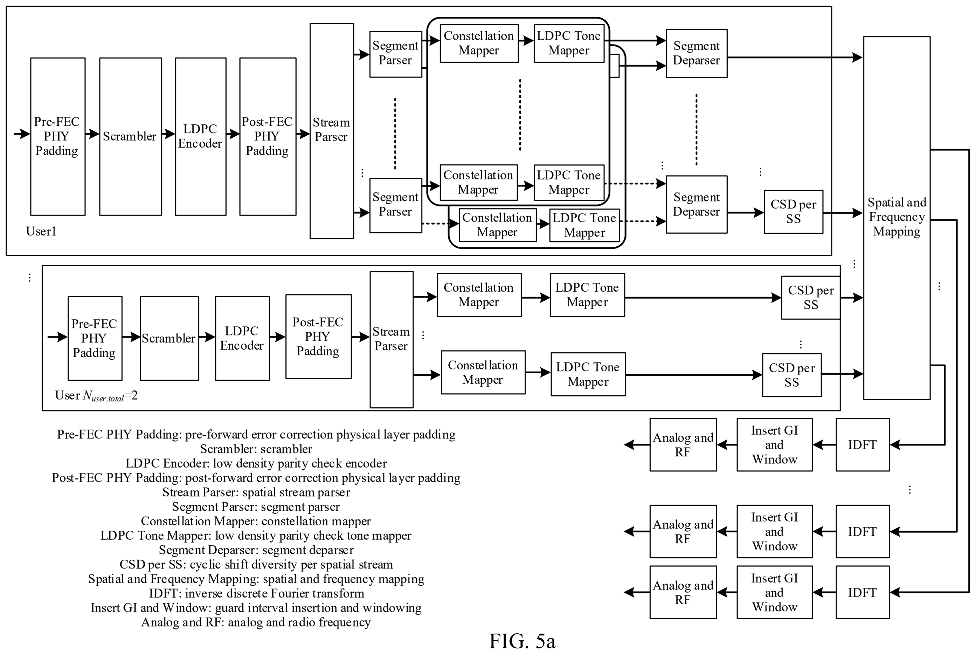

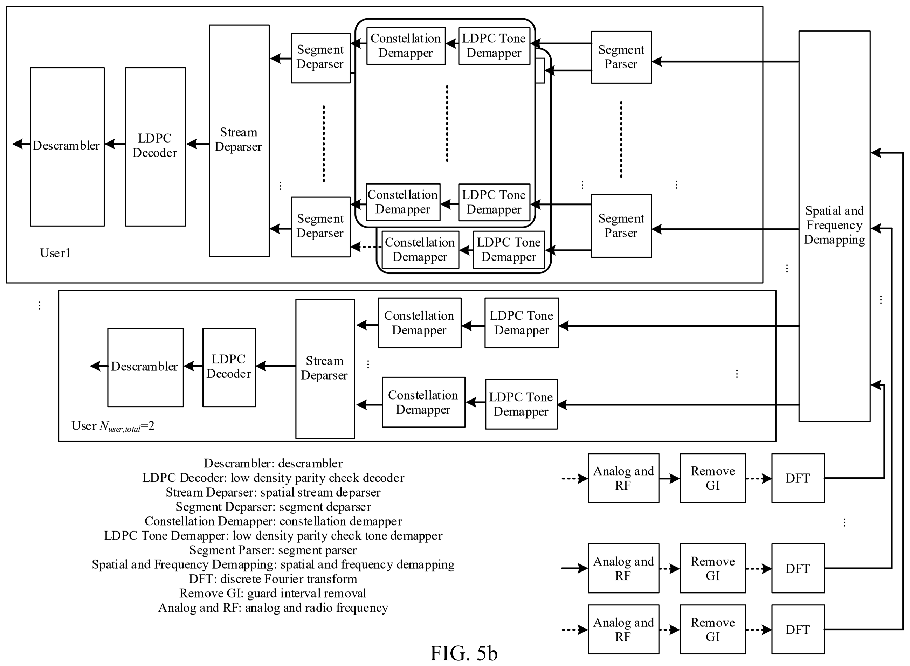

FIG. 5a is a diagram of a manner of generating a PPDU according to an embodiment of this application. FIG. 5b is a diagram of a manner of parsing a PPDU according to an embodiment of this application. FIG. 5a and FIG. 5b show examples in which a bandwidth of the PPDU is 160 MHz and a first bandwidth is lower 80 MHz. A full-bandwidth user is the user 1, and a partial-bandwidth user is the user 2. Table 1 shows examples of functions of modules in FIG. 5a. The process of generating the PPDU shown in FIG. 5a may also be a process of generating and sending the PPDU (for example, sending the PPDU using a radio frequency). The process of parsing the PPDU shown in FIG. 5b may also be a process of receiving (for example, receiving the PPDU using a radio frequency) and parsing the PPDU. User *N_{user,total}*=2 shown in FIG. 5a and FIG. 5b may be user2 (user2). FIG. 5a and FIG. 5b show examples in which there is one full-bandwidth user and one partial-bandwidth user. During specific implementation, there may be more full-bandwidth users or more partial-bandwidth users. Examples are not enumerated herein.

Descriptions shown in FIG Table 1 are merely examples, and should not be construed as a limitation on embodiments of this application. The manner in which the second communication apparatus parses the PPDU may be reverse to the process of generating the PPDU. Therefore, functions of the modules in FIG. 5b are not enumerated. For example, the process of parsing the PPDU may include at least one of the following modules: analog and radio frequency, GI removal, discrete Fourier transformation (discrete Fourier transformation, DFT), spatial and frequency demapping (spatial and frequency demapping), segment parser, LDPC subcarrier demapper, constellation demapper, segment deparser, spatial stream deparser, LDPC decoder, and descrambler.

**Table 1**

| Names of modules | Chinese translations | Descriptions of functions |
|---|---|---|
| Pre-FEC PHY Padding | Pre-forward error correction (forward error correction, FEC) physical layer padding | Append pre-coding padding bits towards a preset boundary |
| Scrambler | Scrambler | Scramble bits to increase randomness of the bits and avoid consecutive 0s or 1s |
| LDPC Encoder | Low density parity check (low density parity check, LDPC) encoder | Perform LDPC encoding |
| Post-FEC PHY Padding | Post-forward error correction physical layer padding | Number of post-coding bits padded to a total number of bits, where the padding bits are not encoded |
| Stream Parser | Spatial stream parser | Allocate bitstreams to different spatial streams and further process each stream |
| Segment Parser | Segment parser | Divide a bitstream of a stream into several segments, where when an allocated RU is greater than 996 tones (corresponding to 80 MHz), the segment parser needs to allocate the bitstream to different 80 MHz for parallel processing |
| Constellation Mapper | Constellation mapper | Maps bits to different constellation points |
| LDPC Tone Mapper | LDPC tone mapper | Ensure that LDPC constellation points are separated at a sufficient distance in frequency domain |
| Segment Deparser | Segment deparser | Merge bits of different segments, where when an allocated RU is greater than 996 tones (corresponding to 80 MHz), the segment parser deparser is required |
| CSD per SS | Cyclic shift diversity per spatial stream (cyclic shift diversity per spatial stream, CSD per SS) | Multiply different phase rotations on different spatial streams, to avoid unintentional beamforming |
| Spatial and Frequency Mapping | Spatial and frequency mapping | Map bits of different users to different spatial streams and subcarriers in different frequency domain |
| IDFT | Inverse discrete Fourier transformation (inverse discrete Fourier transformation, IDFT) | |
| Insert GI and Window | Guard interval (guard interval, GI) insertion and windowing | |
| Analog and RF | Analog and radio frequency (radio frequency, RF) | |

Specific functions of the modules in FIG. 5a are not limited in embodiments of this application.

In FIG. 5a, parts before spatial and frequency mapping may be a process of mapping a bitstream of the user 1 in a data field of a PPDU to data subcarriers in a PPDU bandwidth, and a process of mapping a bitstream of the user 2 in the data field of the PPDU to data subcarriers in the PPDU bandwidth. The user 1 is the full-bandwidth user, and the PPDU bandwidth is greater than 80 MHz. Therefore, the bitstream of the user 1 needs to be allocated to different 80 MHz for parallel processing. For example, the bitstream of the user 1 needs to be processed by the segment parser and the segment deparser.

A U-SIG field and a first SIG field shown below may be used to carry information related to demodulating the data field.

The following describes a frame format of a PPDU in embodiments of this application.

The following fields may be separate embodiments. For example, the U-SIG field may be a separate embodiment, or the first SIG field may be a separate embodiment. Alternatively, fields shown below may be combined. For example, the PPDU includes both the U-SIG field shown in embodiments of this application and the first SIG field shown in embodiments of this application. Any possible implementation or example of the frame format of the PPDU shown below may be combined with the communication method shown in FIG. 2. For example, for the frame format of the PPDU in the method shown in FIG. 2, refer to any possible implementation or example shown below.

In a possible implementation of this application, the PPDU includes the U-SIG field. The U-SIG field may carry signaling used to demodulate subsequent data. The U-SIG field may include first indication information, and the first indication information may indicate a transmission mode of the PPDU. For example, the transmission mode of the PPDU is a partial-bandwidth MU-MIMO transmission mode. For specific descriptions of the partial-bandwidth MU-MIMO transmission mode, refer to FIG. 2 or related descriptions in FIG. 3a to FIG. 3d. Details are not described herein again.

For example, the first indication information may be carried in a PPDU type and compression mode (PPDU type & compression mode) field. For example, the PPDU type and compression mode field may be located at bits B0 and B1 of a second orthogonal frequency division multiplexing (orthogonal frequency division multiplexing, OFDM) symbol in the U-SIG field. Certainly, a location of the PPDU type and compression mode field may change with development of the standard. A specific location of the PPDU type and compression mode field is not limited in embodiments of this application.

Table 2 shows an example of the PPDU type and compression mode field. As shown in Table 2, if a value of the PPDU type and compression mode field is 3, it may indicate that the transmission mode of the PPDU is the partial-bandwidth MU-MIMO transmission mode. Table 2 shows an example in which the U-SIG field indicates downlink and the value of the PPDU type and compression mode field is 3. If the U-SIG field indicates uplink, and the value of the PPDU type and compression mode field is 2 or 3, it may alternatively indicate that the transmission mode of the PPDU is the partial-bandwidth MU-MIMO transmission mode.

**Table 2**

| U-SIG field | | Description | | | | |
|---|---|---|---|---|---|---|
| Uplink/Downlink | PPDU type and compression mode | PPDU type | First SIG present? | Resource unit allocation subfields present? | Number of user fields or transmitters in a PPDU | Note |
| 0 (downlink) | 0 | MU | Yes | Yes | ≥1 | DL OFDMA, including non-MU-MIMO and MU-MIMO |
| | 1 | MU | Yes | No | 1 for SU transmission; 0 for NDP | SU transmission or NDP (that is not addressed to an AP) |
| | 2 | MU | Yes | No | >1 | DL non-OFDMA MU-MIMO |
| | 3 | MU | Yes | Yes | >1 | Partial-bandwidth MU-MIMO |
| 1 (uplink) | 0 | TB PPDU | No | - | ≥1 | UL OFDMA or UL non-OFDMA (including non-MU-MIMO and MU-MIMO) |
| | 1 | MU | Yes | No | 1 for SU transmission; 0 for NDP | SU transmission or NDP (that is addressed to an AP) |
| | 2 and 3 | - | - | - | - | Validate |

For example, the U-SIG field may further include at least one of the following fields: a physical layer version identifier (PHY version identifier), a bandwidth (bandwidth, BW) (for example, indicating a PPDU bandwidth), uplink/downlink, a basic service set color (basic service set color, BSS color), a transmission opportunity, a punctured channel indication (punctured channel indication), a modulation and coding scheme (modulation and coding scheme, MCS), a number of first SIG symbols, cyclic redundancy check (cyclic redundancy check, CRC), and a tail (tail). The U-SIG field may further include some validate (validate) bits or disregard (disregard) bits. Details are not described in embodiments of this application. Specific content of the U-SIG field is not limited in embodiments of this application.

For another example, the first indication information may not be carried in a PPDU type and compression mode field. For example, if the first indication information occupies 1 bit, and the first indication information may be carried in a 25^{th} bit of a first OFDM symbol of the U-SIG field, a value 1 of the 25^{th} bit may indicate that the transmission mode of the PPDU is the partial-bandwidth MU-MIMO transmission mode. A specific location of the first indication information is not limited in embodiments of this application.

For still another example, the first indication information may alternatively indicate, based on a value of the PPDU type and compression mode field and another field, that the transmission mode of the PPDU is the partial-bandwidth MU-MIMO transmission mode. The another field is a field other than the PPDU type and compression mode field in the U-SIG field. For example, if the PPDU type and compression mode field indicates that the transmission mode of the PPDU is an MU-MIMO transmission mode, the MU-MIMO transmission mode and the another field jointly indicate that the transmission mode of the PPDU is the partial-bandwidth MU-MIMO transmission mode.

The first indication information in the U-SIG field explicitly indicates that the transmission mode of the PPDU is the partial-bandwidth MU-MIMO transmission mode, so that the second communication apparatus can effectively learn of the transmission mode of the PPDU received by the second communication apparatus to correctly parse the PPDU.

With reference to the method shown in FIG. 2, for example, the PPDU in step 201 includes a U-SIG field, and the U-SIG field includes the first indication information. The descriptions of the first indication information are applicable to one partial bandwidth and a plurality of partial bandwidths.

In another possible implementation of this application, the PPDU includes the first SIG field.

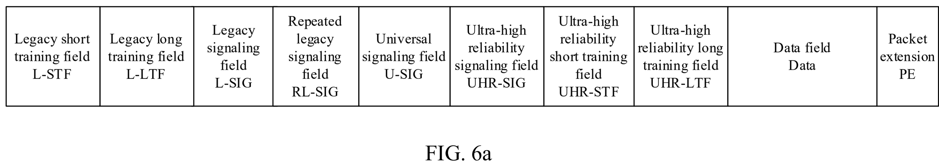

For example, the first SIG field may be referred to as a UHR-SIG field. For example, the PPDU shown in embodiments of this application is applicable to UHR, and the PPDU may be referred to as a UHR PPDU or a UHR MU PPDU. FIG. 6a is a diagram of a format of a UHR PPDU according to an embodiment of this application. As shown in FIG. 6a, the UHR PPDU may include a legacy short training field (legacy short training field, L-STF), a legacy long training field (legacy long training field, L-LTF), a legacy signaling (legacy signal, L-SIG) field, a repeated legacy signaling (repeated L-SIG, RL-SIG) field, a U-SIG field, a UHR-SIG field, a UHR-STF, a UHR-LTF, a data (data) field, and packet extension (packet extension, PE). For example, the L-STF may be used for PPDU discovery, coarse synchronization, and automatic gain control. The L-LTF may be used for fine synchronization and channel estimation. The L-SIG field and the RL-SIG field may be used to carry information related to a length of the PPDU, and repetitions of the two fields are further used by a receiver (the second communication apparatus shown in FIG. 2) for automatic detection. The U-SIG field may carry signaling used to demodulate subsequent data. The UHR-SIG field may be used to carry signaling used to demodulate subsequent data. The UHR-STF may be used for automatic gain control of a subsequent field. The UHR-LTF may be used for channel estimation. The data field may be used to carry data information. The PE may be used to increase processing time of the receiver. In a possible implementation, for specific descriptions of the U-SIG field shown in FIG. 6a, refer to the foregoing specific descriptions of the U-SIG field (including the foregoing three examples of the U-SIG field).

The foregoing specific descriptions of the fields are merely examples. During specific implementation, the fields may have more or fewer functions and the like. This is not limited in embodiments of this application. For example, the PPDU shown in embodiments of this application is further applicable to a standard later than 802.11bn. A specific name of the first SIG field is not limited in embodiments of this application.

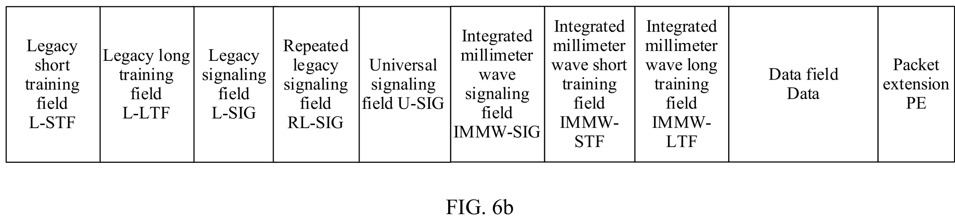

For another example, the first SIG field may also be referred to as an IMMW-SIG field. For example, the PPDU shown in embodiments of this application is applicable to a millimeter wave frequency band, for example, applicable to the IMMW standard, and the PPDU may be referred to as an IMMW PPDU or an IMMW MU PPDU. FIG. 6b is a diagram of a format of an IMMW PPDU according to an embodiment of this application. As shown in FIG. 6b, the IMMW PPDU may include an L-STF, an L-LTF, an L-SIG field, an RL-SIG field, a U-SIG field, an IMMW-SIG field, an IMMW-STF, an IMMW-LTF, a data field, and PE. For descriptions of the fields, refer to FIG. 6a. Details are not described herein again. In a possible implementation, for specific descriptions of the U-SIG field shown in FIG. 6b, refer to the foregoing specific descriptions of the U-SIG field (including the foregoing three examples of the U-SIG field).

The fields included in the UHR PPDU shown in FIG. 6a and the fields included in the IMMW PPDU shown in FIG. 6b and a sequence of the fields are merely examples, and should not be understood as a limitation on embodiments of this application. For ease of description, the following uses the UHR PPDU as an example for description when a specific example is used.

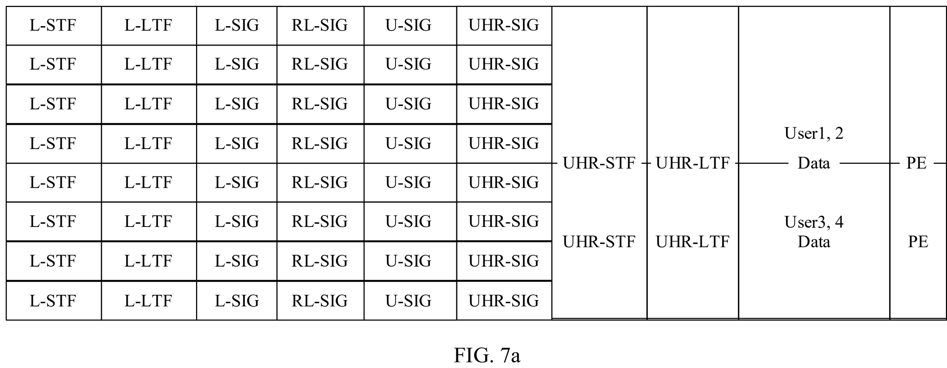

For example, for a combination of the frame format of the UHR PPDU shown in FIG. 6a and the partial-bandwidth MU-MIMO transmission mode shown in FIG. 2, refer to FIG. 7a. In FIG. 7a, a bandwidth of a PPDU is 160 MHz, and the PPDU corresponds to four target users (or there are four target users for the PPDU). A user 1 and a user 2 occupy the entire PPDU bandwidth for transmission, and a user 3 and a user 4 occupy a partial bandwidth (lower 80 MHz) for transmission. The user 1 and the user 2 perform four-user MU-MIMO transmission with the user 3 and the user 4 over the partial bandwidth (lower 80 MHz). The user 1 and the user 2 perform two-user MU-MIMO transmission over higher 80 MHz. The user 1 and the user 2 in FIG. 7a may be equivalent to the first user shown in FIG. 2, and the user 3 and the user 4 in FIG. 7a may be equivalent to the second user shown in FIG. 2. The PPDU bandwidth and the number of target users shown in FIG. 7a are examples, and should not be understood as a limitation on embodiments of this application.

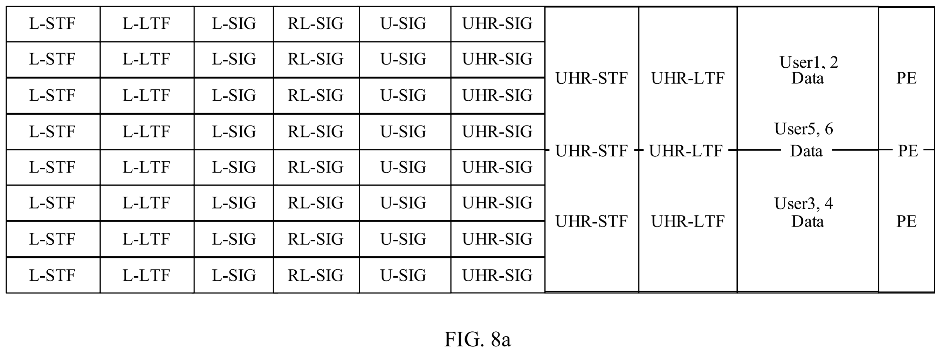

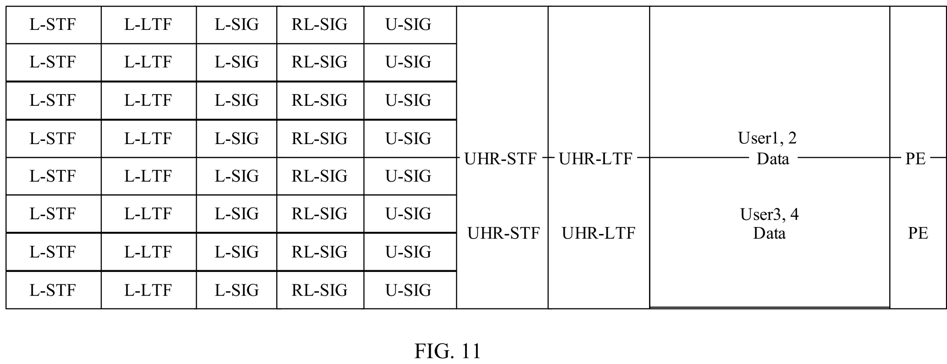

For example, in the UHR PPDU shown in FIG. 7a, a part before a UHR-SIG field may be referred to as a non-UHR modulated part. The non-UHR modulated part is usually transmitted over 20 MHz subchannels. When the PPDU bandwidth is greater than 20 MHz, the non-UHR modulated part is separately transmitted over 20 MHz subchannels. A part after the UHR-SIG field may be referred to as a UHR modulated part, and may be transmitted in a form of an RU or MRU in frequency domain. The non-UHR modulated part of the PPDU is shown in a form of a 20 MHz subchannel in this embodiment of this application, but should not be understood as a limitation on this embodiment of this application. For example, with development of the standard, the non-UHR modulated part may alternatively be transmitted over a 40 MHz subchannel. Examples are not enumerated herein. This description is also applicable to FIG. 8a and FIG. 11. Details are not described below again.

The following describes information carried in the first SIG field.

The first SIG field may include at least one of the following information: second indication information, third indication information, information indicating a number of users performing MU-MIMO transmission over a partial bandwidth, information indicating M, user type indication information, information indicating a number of partial bandwidths, information indicating a number of user field groups, and one or more user fields. The second indication information may indicate at least one of a size and a location of a first bandwidth. The third indication information may indicate at least one of a size and a location of a second bandwidth. M may be a total number of target users corresponding to the PPDU, that is, M is equal to a total number of users. Alternatively, M may be a total number of user fields included in the first SIG field, that is, M is equal to a total number of user fields.

For example, the first SIG field may include a common field and a user-specific field. For example, the common field may include a U-SIG overflow field, and the U-SIG overflow field may include some common information, for example, a spatial reuse parameter, a guard interval, a long training field size, and a number of UHR-LTF symbols, that cannot be carried in the U-SIG field due to insufficient bits. The user-specific field may include signaling information of the target user and the like. Specific content of the common field and the user-specific field is not limited in embodiments of this application. For example, the second indication information and the third indication information may be carried in the common field. The information indicating a number of users performing MU-MIMO transmission over a partial bandwidth and the information indicating M may be carried in the common field. The user type indication information may be carried in the common field or the user-specific field. The information indicating a number of partial bandwidths may be carried in the common field or the user-specific field. The information indicating a number of user field groups may be carried in the common field or the user-specific field. The one or more user fields may be present in the user-specific field. For example, the number of partial bandwidths may be equal to the number of user field groups. The following describes the foregoing information in detail.

### 1. Second indication information

The second indication information indicates at least one of the size and the location of the first bandwidth. The following describes indication methods of the second indication information.

Indication method 1: The second indication information includes a first bitmap, 1 bit in the first bitmap corresponds to one unit bandwidth, and a size of the unit bandwidth is less than or equal to the size of the first bandwidth. In other words, the first bitmap is present in the first SIG field. For example, a value of the 1 bit may indicate whether the unit bandwidth corresponding to the 1 bit is included in the first bandwidth (or whether the unit bandwidth is included in the partial bandwidth). Alternatively, the value of the 1 bit may indicate whether the unit bandwidth corresponding to the 1 bit is a part of the partial bandwidth used for partial-bandwidth MU-MIMO transmission. The unit bandwidth may also be referred to as a partial sub-bandwidth, a partial subband, a unit channel, or the like. A specific name of the unit bandwidth is not limited in embodiments of this application.

For example, one first bitmap is present in the first SIG field, and 1 bit in the first bitmap may correspond to one unit bandwidth. The 1 bit setting to 1 indicates that the unit bandwidth is a part of the partial bandwidth used for partial-bandwidth MU-MIMO transmission. The 1 bit setting to 0 indicates that the unit bandwidth is not a part of the partial bandwidth used for partial-bandwidth MU-MIMO transmission. Certainly, a relationship between the value and the meaning of the bit is merely an example. For example, the 1 bit setting to 0 indicates that the unit bandwidth is a part of the partial bandwidth used for partial-bandwidth MU-MIMO transmission, and the 1 bit setting to 1 indicates that the unit bandwidth is not a part of the partial bandwidth used for partial-bandwidth MU-MIMO transmission.

For example, each bit corresponds to 80 MHz, the PPDU bandwidth is 160 MHz, and a length of the first bitmap is 2 bits. In ascending order of frequencies, if the first bitmap indicates 10, it indicates that lower 80 MHz is used for partial-bandwidth MU-MIMO transmission (or lower 80 MHz is the partial bandwidth), and higher 80 MHz is not used for partial-bandwidth MU-MIMO transmission (or higher 80 MHz is not the partial bandwidth). For example, as shown in FIG. 7a, the user 3 and the user 4 may perform four-user MU-MIMO transmission with the user 1 and the user 2 over lower 80 MHz. The user 1 and the user 2 perform two-user MU-MIMO transmission over higher 80 MHz. For another example, each bit corresponds to 80 MHz, the PPDU bandwidth is 320 MHz, and the length of the first bitmap is 4 bits. In ascending order of frequencies, if the first bitmap indicates 1100, it indicates that lower 160 MHz is used for partial-bandwidth MU-MIMO transmission, and higher 160 MHz is not used for partial-bandwidth MU-MIMO transmission.

For example, the length of the first bitmap may be related to the PPDU bandwidth. For example, the length of the first bitmap may be determined based on the PPDU bandwidth and the unit bandwidth. For example, a unit bandwidth corresponding to 1 bit may be 20 MHz, and the PPDU bandwidth is 160 MHz. In this case, the length of the first bitmap is 8 bits. For another example, a unit bandwidth corresponding to 1 bit may be 40 MHz, and the PPDU bandwidth is 160 MHz. In this case, the length of the first bitmap may be 4 bits. In this manner, because the length of the first bitmap is more flexibly selected, the first communication apparatus may indicate the length of the first bitmap to the second communication apparatus before sending the PPDU, or the first communication apparatus may include length information of the first bitmap in the first SIG field.

For another example, the length of the first bitmap may be fixed. For example, the length of the first bitmap may be defined in a standard. For example, the length of the first bitmap may be always set to a number of bits required by a possible maximum bandwidth of the PPDU. For example, when the PPDU bandwidth is 160 MHz, the length of the first bitmap is 4 bits, and 1 bit corresponds to a unit bandwidth of 80 MHz. If the first bitmap indicates 1000, in ascending order of frequencies, it indicates that lower 80 MHz is used for partial-bandwidth MU-MIMO transmission and higher 80 MHz is not used for partial-bandwidth MU-MIMO transmission. The other two 0s also indicate that partial-bandwidth MU-MIMO transmission is not performed. In this manner, the length of the first bitmap is fixed. Therefore, this manner is simpler. The foregoing listed bandwidths are merely examples. The manner in which the first bitmap indicates the size and the location of the first bandwidth is applicable to both the UHR PPDU and the IMMW PPDU.

The first bitmap indicates the size and the location of the first bandwidth, so that the target user can clearly learn of the size and the location of the first bandwidth. This is more flexible.

Indication method 2: The second indication information includes 1 bit or a plurality of bits, and the 1 bit or the plurality of bits may indicate a size of the partial bandwidth. In other words, the first SIG field includes 1 bit or the plurality of bits. For example, there is a correspondence between a value of the 1 bit or the plurality of bits and the size of the partial bandwidth. For example, the first SIG field includes the 1 bit. When a maximum value of the PPDU bandwidth is 320 MHz, the 1 bit indicates whether the partial bandwidth is 80 MHz or 160 MHz. For another example, the first SIG field includes the plurality of bits. When the PPDU bandwidth is greater than 320 MHz, the plurality of bits may indicate that the partial bandwidth is 240 MHz, 320 MHz, 480 MHz, 640 MHz, or the like. Examples are not enumerated herein.

For example, the location of the first bandwidth is primary 80 MHz or primary 160 MHz. For another example, for the IMMW PPDU, the location of the first bandwidth may be primary 320 MHz.

For another example, the location of the first bandwidth is preset. For example, the location, obtained through negotiation, for parking (park) the first bandwidth may be on an 80 MHz or 160 MHz subchannel. A target wakeup time (target wakeup time, TWT) + subchannel selective transmission (subchannel selective transmission, SST) mechanism may be used to negotiate the location of the subchannel for parking. For example, the location, obtained through negotiation, of the subchannel for parking may be indicated by the AP to the target user (for example, the partial-bandwidth user). For example, information sent by the AP includes a bitmap, and the bitmap may indicate the location of the subchannel on which the partial-bandwidth user can park. Alternatively, the location of the first bandwidth may be indicated by the AP to the target user (for example, the partial-bandwidth user) at the beginning of a transmission opportunity.

The 1 bit or the plurality of bits indicate the size of the first bandwidth, to effectively reduce overheads.

Indication method 3: The second indication information includes at least 1 bit, and the at least 1 bit indicates a resource unit RU or multi-resource unit MRU corresponding to (or occupied by) the first bandwidth. In other words, the first SIG field includes the at least 1 bit. A value of the at least 1 bit may indicate the RU or MRU corresponding to the partial bandwidth, that is, may indicate both the size and the location of the first bandwidth.

Table 3 shows examples of four RU sizes. Certainly, an MRU or RU of another size may be further extended. Examples are not enumerated herein. Table 3 is merely an example. During specific implementation, a relationship between the value of the at least 1 bit and the RU or MRU corresponding to the first bandwidth may be shown in a table, for example, may be larger than Table 3, or may be a part of Table 3. Table 3 is shown by using 5 bits as an example. A relationship between bit values and a PPDU bandwidth in Table 3 is merely an example, and should not be understood as a limitation on embodiments of this application.

**Table 3**

| PPDU bandwidth | Values of 5 bits | RU | Meaning |
|---|---|---|---|
| 80, 160, and 320 | 0 to 3 | 242-tone RU | RU 1 to RU 4 |
| 160 and 320 | 4 to 7 | | RU 5 to RU 8 |
| 320 | 8 to 15 | | RU 9 to RU 16 |
| 80, 160, and 320 | 16 and 17 | 484-tone RU | RU 1 and RU 2 |
| 160 and 320 | 18 and 19 | | RU 3 and RU 4 |
| 320 | 20 to 23 | | RU 5 to RU 8 |
| 160 and 320 | 24 and 25 | 996-tone RU | RU 1 and RU 2 |
| 320 | 26 and 27 | | RU 3 and RU 4 |
| 320 | 28 and 29 | 2*996-tone RU | RU 1 and RU 2 |
| Any | 30 and 31 | Reserved | |

In Table 3, the 242-tone RU may correspond to one 20 MHz bandwidth, the 484-tone RU may correspond to one 40 MHz bandwidth, the 996-tone RU may correspond to one 80 MHz bandwidth, and the 2*996-tone RU may correspond to one 160 MHz bandwidth.

For example, the PPDU bandwidth is 80 MHz, and values of the 5 bits are 0 to 3. For example, the values of the 5 bits are 0 and the RU size is the 242-tone RU. It indicates that an RU occupied by the first bandwidth is the RU 1, for example, the first bandwidth is lower 20 MHz. For another example, the values of the 5 bits are 1 and the RU size is the 242-tone RU. It indicates that the RU occupied by the first bandwidth is the RU 2, for example, the first bandwidth is a 2^{nd} 20 MHz bandwidth in ascending order of frequencies. For another example, the PPDU bandwidth is 160 MHz, and the values of the 5 bits may be 0 to 7. For another example, the PPDU bandwidth is 320 MHz, and the values of the 5 bits may be 0 to 15. Specific examples in Table 2 are not enumerated herein.

Table 3 is shown by using an RU as an example. During specific implementation, the at least 1 bit may alternatively indicate the MRU occupied by the first bandwidth, for example, indicate that the MRU occupied by the first bandwidth is a 484+242-tone MRU. Specific examples of the MRU are not enumerated.

The RU or MRU occupied by the first bandwidth is indicated by using table indexes in the indication method 3, to more specifically represent the relationship between the RU or MRU and the partial bandwidth.

Indication method 4: The second indication information is carried in a resource unit allocation (RU allocation) field, and the resource unit allocation field indicates the size and the location of the first bandwidth. In other words, one or more resource unit allocation fields may be present in the first SIG field. The resource unit allocation field may reuse a resource unit allocation subfield (RU allocation subfield) and a primary/secondary 160 (primary/Secondary 160, PS160) subfield in a trigger frame, or reuse one or more resource unit allocation subfields (RU allocation subfield(s)) transmitted in the UHR-SIG field during OFDMA transmission.

The indication method 4 may be equivalent to further extension of the indication method 3, but the communication parties may not store tables in the indication method 4, to save storage space. A size that is not supported by some transmission, for example, an RU or MRU less than 242 tones, is reserved in this case.

The indication method 1 to the indication method 4 are shown by using an example in which the first SIG field includes the second indication information. In a possible implementation, the first SIG field may not include the second indication information, but determine at least one of the size and the location of the first bandwidth according to a correspondence between the PPDU bandwidth and the partial bandwidth, or at least one of the size and the location of the first bandwidth may be fixed. For example, the size of the first bandwidth is fixed at 80 MHz by default. Alternatively, when the PPDU bandwidth is 160 MHz, the first bandwidth is 80 MHz by default. When the PPDU bandwidth is 320 MHz, the first bandwidth is 160 MHz by default. Alternatively, the size of the first bandwidth is a maximum bandwidth supported by the partial-bandwidth user. Alternatively, the size of the first bandwidth is a maximum bandwidth supported by a user capability. Based on the indication manner 2 in which the location of the first bandwidth may not be indicated, the first SIG field may not indicate the at least one of the size and the location of the first bandwidth, for example, may not indicate the location of the first bandwidth or the size of the first bandwidth, or may not indicate the size and the location of the first bandwidth.

### 2. Information indicating M

For example, M may be equal to the total number of users or may be equal to the total number of user fields. The information indicating M may also be referred to as information about M, M, or the like. A specific name of the information is not limited in this embodiment of this application.

For example, when there is one partial bandwidth, the information indicating M may also indicate the number of users performing MU-MIMO transmission over the partial bandwidth. In this case, the total number of users may be equal to the total number of user fields.

Alternatively, when there are a plurality of partial bandwidths, the information indicating M may indicate a total number of users performing MU-MIMO transmission over the plurality of partial bandwidths, or the information indicating M may indicate a total number of user fields in the user-specific field. In this case, the total number of users performing MU-MIMO transmission over the plurality of partial bandwidths is less than the total number of user fields.

### 3. User type indication information

The user type indication information may indicate that a type of a target user is a full-bandwidth user or a partial-bandwidth user. For example, in FIG. 2, a type of the first user is a full-bandwidth user, and types of the second user and the third user are both partial-bandwidth users. For another example, for FIG. 3b and FIG. 3d, types of the first user #1 and the first user #2 are both full-bandwidth users, and types of the second user #1 and the second user #2 are both partial-bandwidth users. For another example, for FIG. 3d, types of the third user #1 and the third user #2 are both partial-bandwidth users.

For example, the user type indication information may be carried in the common field. For example, the user type information may be a second bitmap. In other words, a second bitmap may be present in the common field, and a length of the second bitmap may be M, where M is an integer greater than 1. For example, M may be equal to the number of users performing partial-bandwidth MU-MIMO transmission, or M may be equal to the total number of target users corresponding to the PPDU. A bit of the second bitmap indicating 1 may indicate that a type of a corresponding target user is a full-bandwidth user, and the bit indicating 0 may indicate that the type of the corresponding target user is a partial-bandwidth user. The correspondence between the value of the bit and the meaning of the bit is merely an example. For example, a bit indicating 0 may indicate that a type of a corresponding target user is a full-bandwidth user, and the bit indicating 1 may indicate that the type of the corresponding target user is a partial-bandwidth user. For another example, M may be equal to the total number of user fields included in the first SIG field. For example, a bit of the second bitmap indicating 1 may indicate that a type of a target user corresponding to a user field is a full-bandwidth user, and the bit indicating 0 may indicate that the type of the target user corresponding to the user field is a partial-bandwidth user. For example, the second bitmap may include a plurality of bits corresponding to a full-bandwidth user, and a number of bits corresponding to the full-bandwidth user may be equal to a number of partial bandwidths.

For example, an order of target users corresponding to bits of the second bitmap corresponds to an order of user fields in the user-specific field. The order of the user fields in the user-specific field may be determined based on a number of spatial streams of the target user. Alternatively, the order of the target users corresponding to the bits of the second bitmap may be determined based on sizes or locations of bandwidths corresponding to the target users. The order of the target users corresponding to the bits of the second bitmap is not limited in this embodiment of this application.

The second bitmap may be replicated (for example, the second bitmap may be repeatedly transmitted through different content channels) through different content channels (content channel, CC), or may be divided into several parts and carried in different content channels (for example, corresponding to user fields for transmission). For example, the content channel may indicate content transmitted over a 20 MHz bandwidth in the first SIG field (for example, the UHR-SIG field or the IMMW-SIG field). When the PPDU bandwidth is 20 MHz, the first SIG field includes one CC. When the PPDU bandwidth is 40 MHz, the first SIG field may include two CCs: a CC 1 and a CC 2 in ascending order of frequencies. Formats of signaling fields in the two content channels are the same, but content may be different. When the PPDU bandwidth is 80 MHz, two CCs exist in each 40 MHz bandwidth, there are four channels in total, and the four channels are of a structure of a CC 1, a CC 2, a CC 1, and a CC 2 in ascending order of frequency. When the PPDU bandwidth is 160 MHz or higher, there are two content channels in each 80 MHz bandwidth. Content of the first SIG field may be different in different 80 MHz bandwidths. The foregoing descriptions of the content channels are merely examples. For specific descriptions of the content channel, refer to a related standard. This is not limited in embodiments of this application. With development of the standard, the arrangement manner or the format of the content channel may change. When the arrangement manner or the format of the content channel changes, a location or an arrangement manner of the second bitmap in the content channel may also change.

For another example, the user type information may be carried in the user-specific field. For example, the user field may include 1 bit indicating that a type of a target user corresponding to the user field is a full-bandwidth user or a partial-bandwidth user. In other words, the user field in the user-specific field may include the 1 bit. Therefore, the target user may learn, from the user field corresponding to the target user, whether the type of the target user is a full-bandwidth user or a partial-bandwidth user.

Certainly, the user type information may alternatively be present in both the common field and the user-specific field. For example, the common field includes the second bitmap, and the user field in the user-specific field includes the 1 bit indicating the type of the target user corresponding to the user field.

The descriptions of the user type information are applicable to one partial bandwidth and a plurality of partial bandwidths. The following does not describe details of the case of the plurality of partial bandwidths.

### 4. User field

The user field may be included in the user-specific field in the first SIG field. For example, the user field may include at least one of the following fields: a station identifier, an MCS, coding, and spatial configuration. For example, the spatial configuration field may be a 6-bit index table that may indicate spatial stream allocation information of a group of MU-MIMO users. For a specific number of users, one index may correspond to a group of numbers of spatial streams arranged in descending order. For example, when there are four users, 001010 may indicate that numbers of spatial streams of the four users are 2, 2, 2, and 1, respectively. When there are five users, 000101 may indicate that spatial streams of the five users are 3, 2, 1, 1, and 1, respectively. For the group of numbers of spatial streams 2, 2, 2, 1, if a user field of a target user is a 2^{nd} user field in the user-specific field, the target user may know that a number of spatial streams of the target user is a 2^{nd} value in 2, 2, 2, and 1, that is, 2. The value shown herein is a value in a spatial stream combination represented by a 6-bit index. In other words, a target user corresponding to a user field may effectively learn, based on an order of the user field in a group of MU-MIMO transmission users, which value in a group of numbers of spatial streams corresponds to a spatial stream of the target user. For specific content of the index table, refer to a related standard. Details are not described herein again. Certainly, with development of the standard, the index table used for spatial stream allocation information may also change. This is not limited in this embodiment of this application.

For example, in the user-specific field, the order of the user fields may correspond to an order of numbers of spatial streams. For example, in the user-specific field, the order (for example, in descending order) of the numbers of spatial streams may indicate the user fields of the target users. When numbers of spatial streams of two target users are the same, an order of user fields of the two target users is not limited in this embodiment of this application.

The descriptions of the user field are also applicable to the case of one or more partial bandwidths.

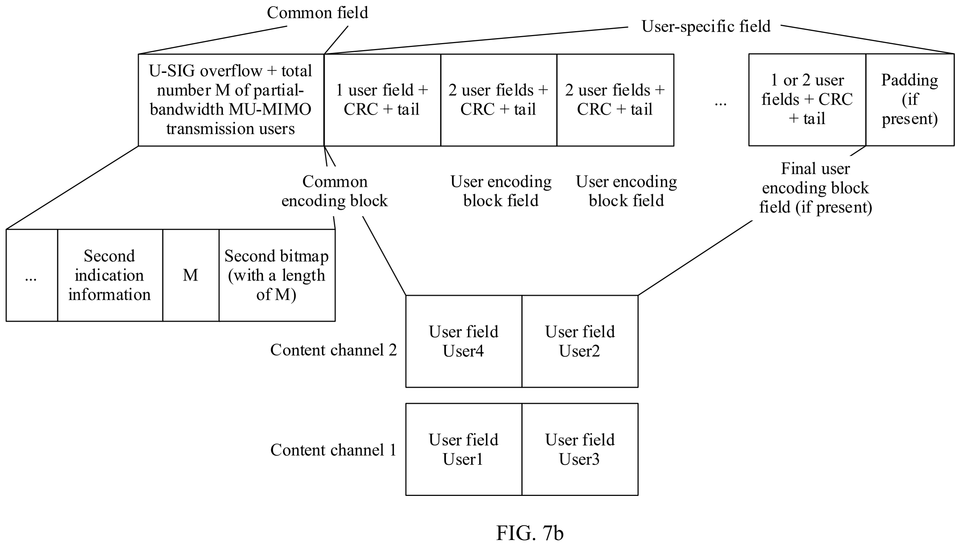

For example, when there is one partial bandwidth, the first SIG field may include the second indication information, the information indicating M, the second bitmap, and the one or more user fields. FIG. 7b is a diagram of a format of a first SIG field according to an embodiment of this application. As shown in FIG. 7b, the PPDU corresponds to four target users (refer to FIG. 7a). If one target user may correspond to one user field, the four user fields may be placed in an order of a user 1, a user 3, a user 4, and a user 2. Specifically, a number of spatial streams of the user 1 is not less than a number of spatial streams of the user 3, the number of spatial streams of the user 3 is not less than a number of spatial streams of the user 4, and the number of spatial streams of the user 4 is not less than a number of spatial streams of the user 2. The four user fields may be distributed in two content channels. For example, a user field (a user field user1 shown in FIG. 7b, which is referred to as a user field 1 for short) of the user 1 and a user field of the user 3 (a user field user3 shown in FIG. 7b, which is referred to as a user field 3 for short) may be located in a content channel 1, and a user field of the user 4 (a user field user4 shown in FIG. 7b, which is referred to as a user field 4 for short) and a user field of the user 2 (a user field user2 shown in FIG. 7b, which is referred to as a user field 2 for short) may be located in a content channel 2. When an even number of user fields are present in the user-specific field, numbers of user fields in the two content channels may be the same. When an odd number of user fields are present in the user-specific field, the content channel 1 includes one more user field than the content channel 2.

For example, the full-bandwidth user may use a same number of spatial streams in the entire bandwidth. FIG. 7b shows an example in which the full-bandwidth user corresponds to one user field. For example, in the entire bandwidth, the full-bandwidth user may use non-uniform modulation. For example, different MCSs are used in a higher part (higher 80 MHz shown in FIG. 7a) and a lower part (lower 80 MHz shown in FIG. 7a). Because the full-bandwidth user has different channel conditions and suffers from different user interference in different bandwidths, using different MCSs helps adapt to channels, and further improve a throughput. For example, the full-bandwidth user may correspond to one user field, or may correspond to a plurality of user fields. For example, when the full-bandwidth user corresponds to the plurality of user fields, a number of user fields may be related to a manner of dividing the PPDU bandwidth. For example, for FIG. 3a and FIG. 3b, the first user may correspond to two user fields. The number of user fields corresponding to the full-bandwidth user is not limited in this embodiment of this application.

FIG. 7b shows an example in which the user field is present in two content channels. For example, the user-specific field may alternatively be present in one content channel, or have same content on different 20 MHz channels, where the content is replicated for transmission. For example, the content channel may further include at least one of the following: CRC, a tail (tail) field, and a padding field. For example, the user field 3 in the content channel 1 shown in FIG. 7b may be further followed by CRC and a tail field. The user field 2 in the content channel 2 shown in FIG. 7b may be further followed by CRC, a tail field, and the like.

For example, the first SIG field shown in FIG. 7b may further include the information indicating the number of partial bandwidths. For related descriptions of the fields in FIG. 7b, refer to the foregoing descriptions of the second indication information, the information indicating M, the user type indication information, and the user field. Details are not described herein again.

### 5. Third indication information

The third indication information may indicate at least one of the size and the location of the second bandwidth. For a specific method in which the third indication information indicates at least one of the size and the location of the second bandwidth, refer to the foregoing descriptions of the second indication information. Details are not described herein again. The indication methods of the second indication information shown above are also applicable to a case of two partial bandwidths, for example, the first bandwidth and the second bandwidth shown above, and are also applicable to a case of three or more partial bandwidths.

For example, the first SIG field may include either the second indication information or the third indication information. If the first SIG field includes the second indication information, the size and the location of the second bandwidth may be determined based on the PPDU bandwidth and the size and the location of the first bandwidth. For example, the second bandwidth may be a bandwidth other than the first bandwidth in the PPDU bandwidth. In other words, the size and the location of the second bandwidth may be implicitly determined based on the size and the location of the first bandwidth that are indicated by the second indication information. The first SIG field includes the second indication information or the third indication information to indicate the two partial bandwidths, to reduce signaling overheads.

For another example, the first SIG field may alternatively include the second indication information and the third indication information. For descriptions of the third indication information, refer to the foregoing descriptions of the second indication information, for example, refer to the indication method 1 to the indication method 4. Details are not described herein again. The first SIG field includes the second indication information and the third indication information, so that the target user can clearly learn of a size and a location of each partial bandwidth.

For still another example, there are three or more partial bandwidths like the first bandwidth, the second bandwidth, and a third bandwidth. For example, the first SIG field may include the second indication information and the third indication information, and a size and a location of the third bandwidth may be implicitly determined based on the second indication information and the third indication information. In other words, when there are two or more partial bandwidths, for example, N partial bandwidths, in the PPDU bandwidth, the first SIG field may indicate sizes and/or locations of N-1 partial bandwidths, and a size and a location of a last partial bandwidth may be calculated based on the N-1 partial bandwidths. N is an integer greater than or equal to 2. For an indication method of the size and the location of the third bandwidth, refer to the indication method of the second bandwidth. Details are not described herein again. For another example, the first SIG field may include the second indication information, the third indication information, and fourth indication information, and the fourth indication information may indicate at least one of the size and the location of the third bandwidth. For descriptions of the fourth indication information, refer to the foregoing descriptions of the second indication information, for example, refer to the indication method 1 to the indication method 4. Details are not described herein again.

The second indication information and the third indication information may also be referred to as information indicating a size and/or a location of a partial bandwidth, or information about a partial bandwidth, or the like. During specific implementation, when there are a plurality of partial bandwidths, information (for example, the second indication information and the third indication information) may be distinguished based on indicated partial bandwidths, or names of the information may not be distinguished, for example, the information is collectively referred to as information about a partial bandwidth.

### 6. Information indicating a number of partial bandwidths and information indicating a number of user field groups

When there are a plurality of partial bandwidths, for example, the first SIG field may include the information indicating the number of partial bandwidths (for example, the number of partial bandwidths shown in FIG. 8a is 2). The number of partial bandwidths is indicated, so that the second communication apparatus can effectively learn, based on the second indication information, whether a bandwidth other than the first bandwidth in the PPDU bandwidth is a partial bandwidth and whether the first user performs partial-bandwidth MU-MIMO transmission with another user over the partial bandwidth. Certainly, when there is one partial bandwidth, the first SIG field may also include the information indicating the number of partial bandwidths.

When there are a plurality of partial bandwidths, for another example, the first SIG field may include the information indicating the number of user field groups. The number of user field groups may be equal to a number of indicated partial bandwidths. Target users corresponding to user fields in the user field group perform MU-MIMO transmission over a same bandwidth. Therefore, a number of user field groups may also indicate the number of partial bandwidths. For related descriptions of the user field group, refer to the following descriptions. Details are not described herein. Certainly, when there is one partial bandwidth, the first SIG field may also include the information indicating the number of user field groups. For example, in FIG. 7b, the number of user field groups is one.

When there are a plurality of partial bandwidths, the number of partial bandwidths may be equal to the number of user field groups. It may be considered that the information indicating the number of partial bandwidths and the information indicating the number of user field groups are equivalent or interchangeable.

### 7. Information indicating a number of users performing MU-MIMO transmission over a partial bandwidth

The first SIG field may include the information indicating the number of users performing MU-MIMO transmission over a partial bandwidth. For example, in FIG. 3a, it indicates that a number of users performing MU-MIMO transmission over the first bandwidth is 2. For example, in FIG. 3b, it indicates that the number of users performing MU-MIMO transmission over the first bandwidth is 4. For example, in FIG. 3c, it indicates that the number of users performing MU-MIMO transmission over the first bandwidth is 2, and a number of users performing MU-MIMO transmission over the second bandwidth is 2. For example, in FIG. 3d, it indicates that the number of users performing MU-MIMO transmission over the first bandwidth is 4, and the number of users performing MU-MIMO transmission over the second bandwidth is 4.

For example, the first SIG field may include information indicating a number of partial-bandwidth users corresponding to a partial bandwidth. For example, in FIG. 3d, it indicates that the number of partial-bandwidth users performing MU-MIMO transmission over the first bandwidth is 2, and the number of partial-bandwidth users performing MU-MIMO transmission over the second bandwidth is 2. Certainly, the information indicating the number of partial-bandwidth users corresponding to a partial bandwidth may be replaced with information indicating a number of full-bandwidth users corresponding to a partial bandwidth. Details are not described herein.

In other words, when there are a plurality of partial bandwidths, the first SIG field may include information (which may also be referred to as information about a total number of users corresponding to the partial bandwidths) indicating a sum of a number of partial-bandwidth users and a number of full-bandwidth users that correspond to the partial bandwidths, or the first SIG field may include information indicating the number of partial-bandwidth users corresponding to the partial bandwidths. Certainly, the first SIG field may alternatively include both information indicating a total number of users corresponding to a partial bandwidth and the information indicating the number of partial-bandwidth users corresponding to a partial bandwidth.

### 8. User field group

When the user-specific field includes a plurality of user fields, the plurality of user fields may correspond to at least two user field groups. Target users corresponding to user fields in the user field group perform MU-MIMO transmission over a same bandwidth. Alternatively, a number of partial bandwidths corresponds to user field groups. For example, a number of user field groups may be equal to the number of partial bandwidths. For example, the first SIG field includes at least two user field groups, the user field group includes at least two user fields, and target users corresponding to the at least two user fields in the user field group perform MU-MIMO transmission over a same bandwidth. In other words, the user-specific field in the first SIG field may include the at least two user field groups, and partial bandwidths of target users corresponding to at least two user fields in a same user field group are the same.

For example, the at least two user field groups may be arranged based on an order of frequencies. The at least two user fields in the user field group may be arranged based on an order of numbers of spatial streams. For example, the at least two user field groups may be arranged in ascending order of frequencies. For example, user field groups may be arranged in ascending order of frequencies of partial bandwidths corresponding to the user field groups. The at least two user fields in the user field group may be arranged in descending order of numbers of spatial streams. For example, the user fields may be distributed in descending order of numbers of spatial streams corresponding to target users. Numbers of spatial streams of the target users corresponding to the at least two user fields in the user field group may be the same. For example, in FIG. 2, there are two partial bandwidths: the first bandwidth and the second bandwidth. User fields corresponding to target users performing MU-MIMO transmission over the first bandwidth may be one user field group (for example, referred to as a user field group 1), and user fields corresponding to target users performing MU-MIMO transmission over the second bandwidth may be another user field group (for example, referred to as a user field group 2). Because a frequency of the first bandwidth is less than a frequency of the second bandwidth, an order of the user field groups in the user-specific field may sequentially be the user field group 1 and the user field group 2. An order of the user fields in the user field group 1 may be arranged based on a number of spatial streams of the first user and a number of spatial streams of the second user, and an order of the user fields in the user field group 2 may be arranged based on the number of spatial streams of the first user and a number of spatial streams of the third user.

For a full-bandwidth user, the full-bandwidth user may correspond to more than one user field. For example, numbers of spatial streams, MCSs, and/or the like may be indicated for different partial bandwidths. Because the full-bandwidth user has different channel conditions and suffers from different user interference in different bandwidths, using different MCSs helps adapt to channels, and further improve a throughput. For example, in FIG. 2, the first user may correspond to one user field on the first bandwidth and one user field on the second bandwidth.

FIG. 8a is a diagram of partial-bandwidth MU-MIMO transmission according to an embodiment of this application. As shown in FIG. 8a, a user 3 and a user 4 perform MU-MIMO transmission with a user 5 and a user 6 over lower 80 MHz, and a user 1 and a user 2 perform MU-MIMO transmission with the user 5 and the user 6 over higher 80 MHz. The user 5 and the user 6 are full-bandwidth users, and the user 1, the user 2, the user 3, and the user 4 are partial-bandwidth users.

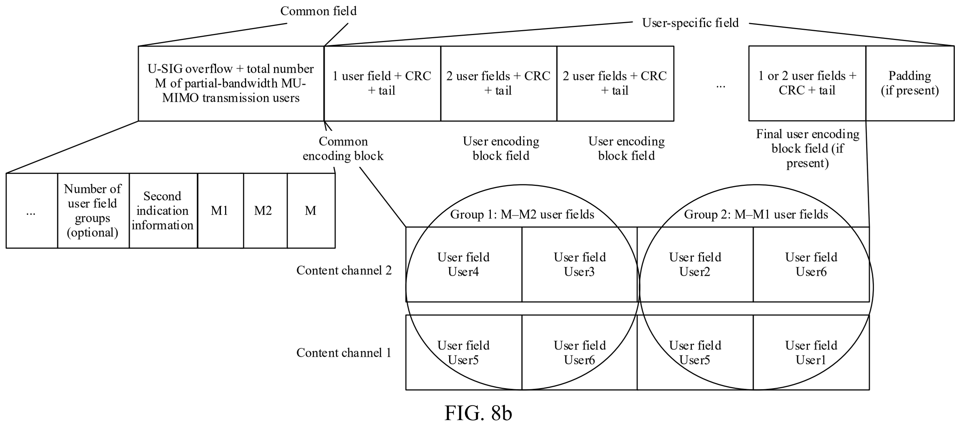

For example, when there are a plurality of partial bandwidths, the first SIG field may include the second indication information, the information indicating M, information indicating to perform MU-MIMO transmission over the partial bandwidths, and the plurality of user fields. The plurality of user fields may correspond to at least two user field groups. The first SIG field may further include the information indicating the number of user field groups. For example, the number of user field groups may be equal to the number of partial bandwidths. FIG. 8b is a diagram of a format of a first SIG field according to an embodiment of this application. As shown in FIG. 8b, the user-specific field may separately indicate corresponding user fields based on the two user field groups. The user-specific field may first indicate user fields of the user 3, the user 4, the user 5, and the user 6 in lower 80 MHz, and then indicate user fields of the user 1, the user 2, the user 5, and the user 6 in higher 80 MHz. In each user field group, an order of user fields is predetermined in descending order of numbers of spatial streams of the target users. As shown in FIG. 8b, in a 1^{st} user field group, a number of spatial streams of the user 5 is not less than a number of spatial streams of the user 6, the number of spatial streams of the user 6 is not less than a number of spatial streams of the user 4, and the number of spatial streams of the user 4 is not less than a number of spatial streams of the user 3. In a 2^{nd} user field group, a number of spatial streams of the user 5 is not less than a number of spatial streams of the user 1, the number of spatial streams of the user 1 is not less than a number of spatial streams of the user 2, and the number of spatial streams of the user 2 is not less than a number of spatial streams of the user 6.

The number of user field groups shown in FIG. 8b may also be referred to as a number of narrowband MU-MIMO groups. The first SIG field includes the second indication information to implicitly indicate at least one of sizes and locations of the two partial bandwidths. M1 is a number of users corresponding to one of the two partial bandwidths. For example, M1 may be 4 (a total number of users is 4), or M1 may be 2 (a number of partial-bandwidth users is 2, and a number of full-bandwidth users is 2). M2 is a number of users corresponding to the other partial bandwidth in the two partial bandwidths. For example, M2 may be 4 (a total number of users is 4), or M2 may be 2 (a number of partial-bandwidth users is 2, and a number of full-bandwidth users is 2).

For example, the first SIG field may further include the second bitmap. For example, a length of the second bitmap may be 6 bits, that is, a total number of users corresponding to the PPDU bandwidth is 6. For another example, the length of the second bitmap may be 8 bits, that is, the user-specific field includes eight user fields. Certainly, the second bitmap may also be combined with the user field group. For example, the length of the second bitmap may be 4 bits, and one partial bandwidth corresponds to one second bitmap, or one user field group corresponds to one second bitmap. For example, the user field in the user-specific field may alternatively include 1 bit indicating a user type of a target user corresponding to the user field.

When the full-bandwidth user corresponds to more than one user field, a number of times that the station identifier appears in the user-specific field may be used to determine a type of a target user corresponding to the station identifier. If a station identifier appears for a plurality of times in the user-specific field, it indicates that a type of a target user corresponding to the station identifier is a full-bandwidth user. If a station identifier appears for one time in the user-specific field, it indicates that a type of a target user corresponding to the station identifier is a partial-bandwidth user. For example, when a station identifier appears for a plurality of times in the user-specific field, for a full-bandwidth user corresponding to the station identifier, numbers of spatial streams and/or MCSs of the full-bandwidth user may be separately set on different partial bandwidths.

The U-SIG field or the first SIG field shown above may be an independent embodiment. For example, the PPDU shown in FIG. 2 includes at least one piece of information in the U-SIG field or the first SIG field. Alternatively, the U-SIG field and the first SIG field may be combined with each other. For example, the PPDU shown in FIG. 2 may include both the U-SIG field and the first SIG field. When the first SIG field is included, there may be one or more partial bandwidths. Similarly, the information included in the first SIG field may also be combined with each other. For example, the second bitmap may be combined with the number of user field groups. For example, two second bitmaps are present in the common field, and one second bitmap may indicate a user type of a user field corresponding to one user field group. Specific manners of combining the information are not enumerated in this embodiment of this application.

Based on the U-SIG field and the first SIG field shown above, the manner in which the second communication apparatus parses the PPDU in step 203 may include: parsing the U-SIG field in the PPDU, and identifying that a transmission mode of the PPDU is a partial-bandwidth MU-MIMO transmission mode; and parsing the first SIG field in the PPDU, to obtain at least one of a size and a location of the partial bandwidth, and identifying, based on a user identifier, a user field that corresponds to the user identifier and that is in the first SIG field, and that a user type corresponding to the user identifier is a full-bandwidth user or a partial-bandwidth user. In other words, the second communication apparatus may identify, based on the U-SIG field, that the transmission mode of the PPDU is the partial-bandwidth MU-MIMO transmission mode, identify at least one of the size and the location of the partial bandwidth based on the first SIG field, and identify the user field of the second communication apparatus based on the user identifier (for example, the station identifier) of the second communication apparatus in the user-specific field. For example, the user-specific field may carry user type information, and the second communication apparatus determines whether the second communication apparatus is a full-bandwidth user or a partial-bandwidth user based on the user type information. Alternatively, the common field carries the user type information. For example, the second communication apparatus identifies, based on a value of a bit, of the second bitmap, corresponding to the second communication apparatus, whether the second communication apparatus is a full-bandwidth user or a partial-bandwidth user. Then, the second communication apparatus receives data of the second communication apparatus using corresponding space resources and/or frequency resources.

The methods shown in embodiments of this application are applicable to the partial-bandwidth MU-MIMO transmission mode, a case of one partial bandwidth, and a case of a plurality of partial bandwidths. The information or the fields in the first SIG field may be more or less than the content shown in FIG. 7b or FIG. 8b based on specific implementation. The foregoing information may be combined with each other, and used as content in the first SIG field.

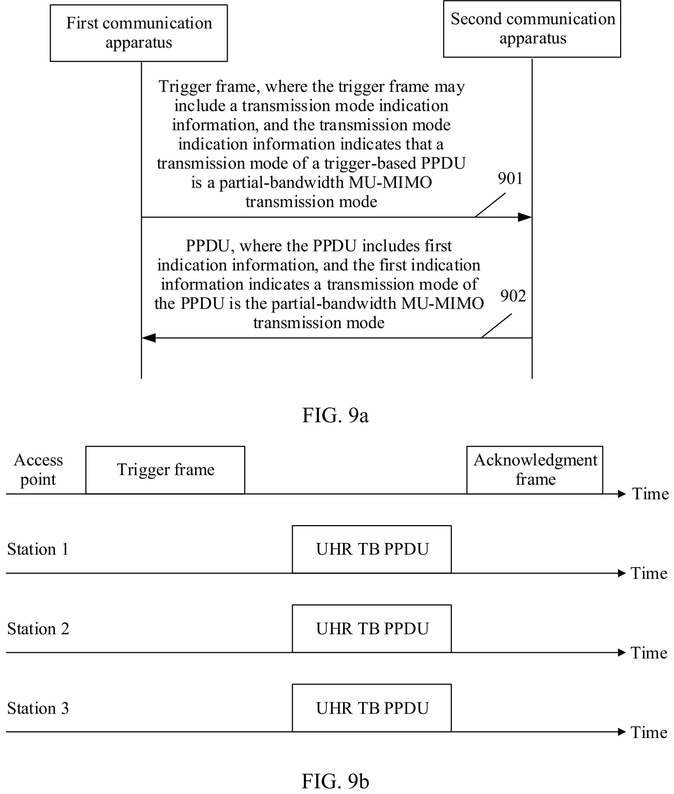

The methods or implementations described above are applicable to downlink multi-user communication between an AP and a plurality of non-AP STAs. Embodiments of this application are also applicable to uplink multi-user transmission, for example, trigger-based uplink multi-user transmission. FIG. 9a is a schematic flowchart of another communication method according to an embodiment of this application. For example, a first communication apparatus may be an AP, and a second communication apparatus may be a non-AP STA. For descriptions of the first communication apparatus and the second communication apparatus, refer to the foregoing descriptions. Details are not described herein again. As shown in FIG. 9a, the method includes the following steps.

901: The first communication apparatus sends a trigger frame, and correspondingly, the second communication apparatus receives the trigger frame. The trigger frame includes a transmission mode indication information, and the transmission mode indication information indicates that a transmission mode of a trigger-based PPDU is a partial-bandwidth MU-MIMO transmission mode.

In a possible implementation, before step 901, the first communication apparatus may further generate the trigger frame.

For example, the trigger frame may be used to trigger a plurality of target users to perform partial-bandwidth MU-MIMO transmission. For descriptions of partial-bandwidth MU-MIMO transmission, refer to the foregoing descriptions. Details are not described herein again. The trigger frame may also be referred to as a trigger frame used to trigger a TB PPDU, or the like. A specific definition of the trigger frame is not limited in embodiments of this application.

For example, the trigger frame may include a common information field, and the common information field includes the transmission mode indication information, and the transmission mode indication information indicates that the transmission mode of the trigger-based PPDU is the partial-bandwidth MU-MIMO transmission mode. For example, the transmission mode indication information may be 1 bit. If the 1 bit indicates 1, it indicates that the transmission mode of the trigger-based PPDU is the partial-bandwidth MU-MIMO transmission mode. If the 1 bit indicates 0, it indicates that the transmission mode of the trigger-based PPDU is not the partial-bandwidth MU-MIMO transmission mode. For another example, the transmission mode indication information may be a plurality of bits, and there is a correspondence between values of the plurality of bits and the trigger-based PPDU transmission mode. If the plurality of bits indicate 1, it indicates that the transmission mode of the trigger-based PPDU is the partial-bandwidth MU-MIMO transmission mode. If the plurality of bits indicate 2, it indicates that the transmission mode of the trigger-based PPDU is a UL OFDMA MU-MIMO transmission mode. If the plurality of bits indicate 3, it indicates that the transmission mode of the trigger-based PPDU is SU transmission or NDP. Examples of the correspondence between the values of the plurality of bits and the transmission modes are not enumerated herein.

For example, the trigger frame further includes a user information list field, the user information list field includes one or more user information fields, and the user information field includes at least one of a resource unit allocation field, a spatial configuration field, and a random access RU information field.

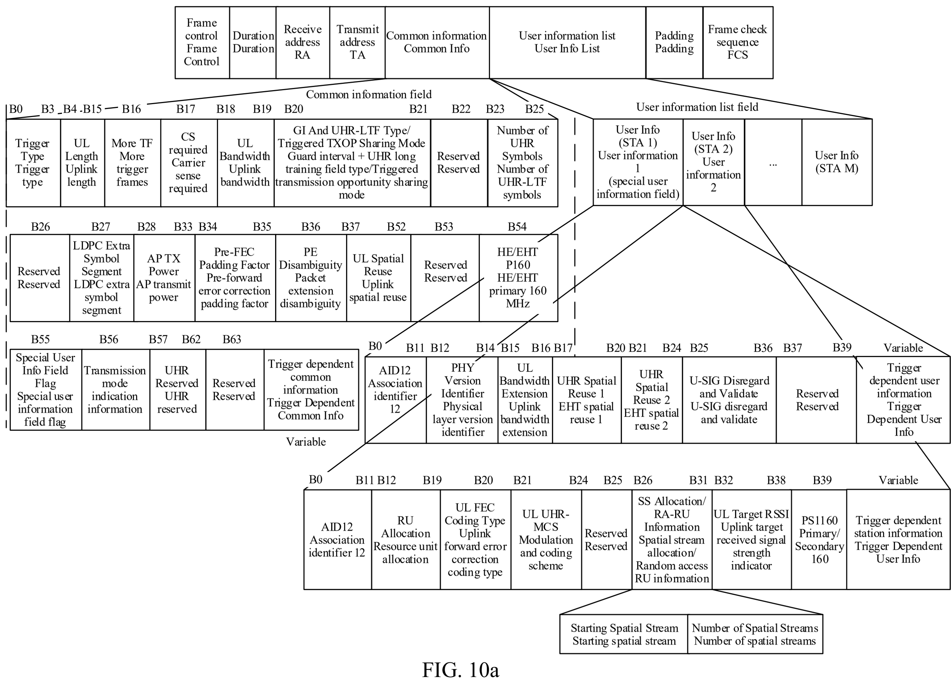

FIG. 10a is a diagram of a format of a trigger frame according to an embodiment of this application. The transmission mode indication information in FIG. 10a occupies 1 bit. The transmission mode indication information may also be referred to as a partial-bandwidth mode indication or the like. A specific name of the transmission mode indication information is not limited in embodiments of this application. As shown in FIG. 10a, the trigger frame separately indicates a resource unit and a number of spatial streams for the target user. Therefore, the trigger frame may independently indicate a size of an RU or MRU, a start value (for example, a starting spatial stream shown in FIG. 10a) of the number of spatial streams, and the number of streams (for example, a number of spatial streams shown in FIG. 10a) of the target user.

For example, the second communication apparatus may determine, based on the trigger frame, an MCS used by the second communication apparatus and/or an RU or MRU used by the second communication apparatus for data transmission. For example, the trigger frame includes the transmission mode indication information, to help the target user (for example, the second communication apparatus) learn of a transmit mode, and determine an MCS that is subsequently recommended to the AP for scheduling. For example, the target user learns that the target user participates in partial-bandwidth MU-MIMO transmission, and the target user may recommend, based on different partial bandwidths, MCSs that can be used by the AP. For another example, the trigger frame includes the transmission mode indication information, to help the target user determine whether to adjust an RU or MRU used for transmission. For example, if the target user learns that the transmission mode is partial-bandwidth MU-MIMO transmission, the target user may reduce a bandwidth when some 20 MHz bandwidths are busy. The reduced part is a bandwidth other than the partial bandwidth.

902: The second communication apparatus sends the PPDU, and correspondingly, the first communication apparatus receives the PPDU. The PPDU includes first indication information, and the first indication information indicates the transmission mode of the PPDU is the partial-bandwidth MU-MIMO transmission mode.

In a possible implementation, before sending the PPDU, the second communication apparatus may further generate the PPDU based on the trigger frame. For example, the PPDU includes a U-SIG field, the U-SIG field includes the first indication information, and the first indication information indicates that the transmission mode of the trigger-based PPDU is the partial-bandwidth MU-MIMO transmission mode. Alternatively, the first indication information may indicate the transmission mode of the PPDU is a trigger-based partial-bandwidth MU-MIMO transmission mode. For specific descriptions of the first indication information and the U-SIG field, refer to the foregoing descriptions. Details are not described herein again.

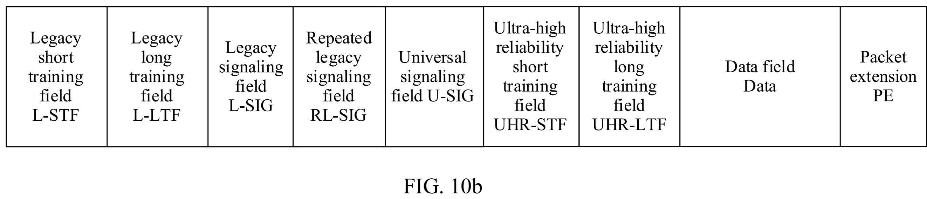

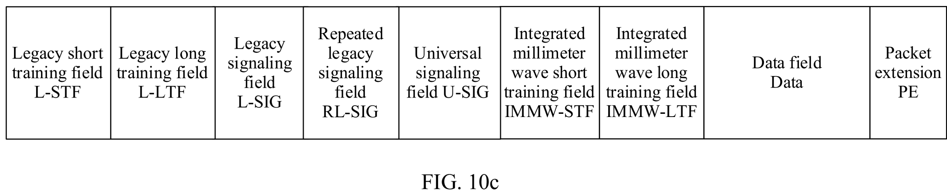

For example, the PPDU may be a trigger-based PPDU, for example, a UHR TB PPDU or an IMMW TB PPDU. FIG. 10b is a diagram of a format of a UHR TB PPDU according to an embodiment of this application. The UHR TB PPDU may not carry a UHR-SIG field. FIG. 10c is a diagram of a format of an IMMW TB PPDU according to an embodiment of this application. The IMMW TB PPDU may not carry an IMMW-SIG field. For specific descriptions of the UHR TB PPDU shown in FIG. 10b, refer to FIG. 6a. For specific descriptions of the IMMW TB PPDU shown in FIG. 10c, refer to FIG. 6b. Details are not described herein again. FIG. 11 is a diagram of partial-bandwidth MU-MIMO transmission of a UHR TB PPDU according to an embodiment of this application. For related descriptions of FIG. 11, refer to FIG. 7a. Details are not described herein again.

In a possible implementation, as shown in FIG. 9b, after receiving the PPDU, the first communication apparatus may further send an acknowledgment frame. The acknowledgment frame may be used to acknowledge that the PPDU is correctly received, and the like. A specific definition of the acknowledgment frame is not limited in this embodiment of this application. FIG. 9b shows an example of three target users: a station 1, a station 2, and a station 3. This should not be understood as a limitation on embodiments of this application.

In a possible implementation, for a specific manner in which the first communication apparatus parses the PPDU, refer to the foregoing descriptions in which the second communication apparatus parses the PPDU. Details are not described herein again.

In embodiments of this application, in the transmission mode of the trigger-based PPDU, the partial-bandwidth MU-MIMO transmission mode is used, to effectively improve a throughput of a user, improve transmission efficiency, and improve a throughput of an entire system.

In comparison with the method shown in FIG. 2, because the trigger frame indicates an MCS, a number of spatial streams, an RU or MRU, and the like of each target user, signaling overheads of the trigger-based PPDU are reduced. For example, the PPDU may not carry the first SIG field. In addition, after resource allocation, the target user may perform decoding based on the size of the RU or MRU corresponding to the target user.

For ease of description, embodiments of this application are shown by using a "field" as an example, and a "field", a "subfield", and the like are not specifically distinguished. Although the "field" and the "subfield" are not specifically distinguished in embodiments of this application, a person skilled in the art may adaptively distinguish a relationship between the fields shown in embodiments of this application.

Embodiments of this application can effectively improve a throughput of a user, further improve transmission efficiency, ensure that a throughput of a user with a large bandwidth capability is not affected by multi-user transmission, and improve a throughput of an entire system.

The following describes a communication apparatuses provided in embodiments of this application.

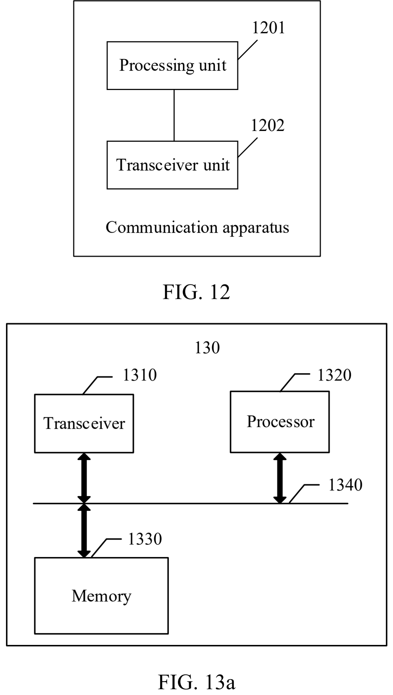

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely a logical function division. During actual implementation, another division manner may be used. The following describes in detail communication apparatuses in embodiments of this application with reference to FIG. 12 to FIG. 14.

FIG. 12 is a diagram of a structure of a communication apparatus according to an embodiment of this application. As shown in FIG. 12, the communication apparatus includes a processing unit 1201 and a transceiver unit 1202. The transceiver unit 1202 may implement corresponding communication functions, and the processing unit 1201 is configured to process data. For example, the transceiver unit 1202 may also be referred to as an interface, a communication interface, a communication unit, or the like.

In some embodiments of this application, the communication apparatus may be configured to perform actions performed by the first communication apparatus in the foregoing method embodiments. In this case, the communication apparatus may be a Wi-Fi device, or a component (for example, a chip, a system, or a functional module) configured in the Wi-Fi device. The transceiver unit 1202 is configured to perform a receiving/sending-related operation of the first communication apparatus in the foregoing method embodiments, and the processing unit 1201 is configured to perform a processing-related operation of the first communication apparatus in the foregoing method embodiments.

For example, the processing unit 1201 is configured to generate a PPDU. The transceiver unit 1202 is configured to send or output the PPDU.

For another example, the transceiver unit 1202 is configured to send or output a trigger frame, and receive or input the PPDU. For example, the processing unit 1201 may be configured to generate the trigger frame. The processing unit 1201 is further configured to parse the PPDU.

Still refer to FIG. 12. In some other embodiments of this application, the communication apparatus may be configured to perform actions performed by the second communication apparatus in the foregoing method embodiments. In this case, the communication apparatus may be a Wi-Fi device, or a component (for example, a chip, a system, or a functional module) configured in the Wi-Fi device. The transceiver unit 1202 is configured to perform a receiving/sending-related operation of the second communication apparatus in the foregoing method embodiments, and the processing unit 1201 is configured to perform a processing-related operation of the second communication apparatus in the foregoing method embodiments.

For example, the transceiver unit 1202 is configured to input or receive a PPDU, and the processing unit 1201 is configured to parse the PPDU.

For another example, the transceiver unit 1202 is configured to receive or input a trigger frame, and send or output the PPDU. For example, the processing unit 1201 may be configured to parse the trigger frame. The processing unit 1201 is further configured to generate the PPDU.

Optionally, in the foregoing embodiments, the communication apparatus may further include a storage unit. The storage unit may be configured to store instructions and/or data. The processing unit 1201 may read the instructions and/or the data in the storage unit, so that the communication apparatus implements the foregoing method embodiments.

In the foregoing embodiments, for specific descriptions of terms such as the PPDU, the trigger frame, the partial-bandwidth MU-MIMO transmission mode, the first indication information, the second indication information, the third indication information, the U-SIG field, and the first SIG field or steps, refer to the descriptions in the foregoing method embodiments. Details are not described herein again.

Specific descriptions of the transceiver unit and the processing unit described in the foregoing embodiments are merely examples. For specific functions, steps, or the like of the transceiver unit and the processing unit, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 12 falls within the protection scope of embodiments of this application. The following description is merely an example, and a product form of the communication apparatus in embodiments of this application is not limited thereto.

In a possible implementation, in the communication apparatus shown in FIG. 12, the processing unit 1201 may be one or more processors. The transceiver unit 1202 may be a transceiver, or the transceiver unit 1202 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled or the like. A manner of connection between the processor and the transceiver is not limited in this embodiment of this application. In a process of performing the foregoing method, a process of sending information in the foregoing method may be a process of outputting the foregoing information by the processor. When outputting the information, the processor outputs the information to the transceiver, so that the transceiver transmits the information. After the information is output by the processor, other processing may further need to be performed before the information arrives at the transceiver. Similarly, a process of receiving information in the foregoing method may be a process of receiving the input information by the processor. When the processor receives the input information, the transceiver receives the information, and inputs the information to the processor. Still further, after the transceiver receives the information, other processing may need to be performed on the information before the information is input into the processor.

As shown in FIG. 13a, a communication apparatus 130 includes one or more processors 1320 and a transceiver 1310.

For example, when the communication apparatus is configured to perform the steps, the methods, or the functions performed by the first communication apparatus, for example, the processor 1320 is configured to generate a PPDU. The transceiver 1310 is configured to send the PPDU.

For another example, the transceiver 1310 is configured to send a trigger frame, and receive the PPDU. In this case, the processor 1320 is configured to generate the trigger frame, and the processor 1320 may be further configured to parse the PPDU.

For example, when the communication apparatus is configured to perform the steps, the methods, or the functions performed by the second communication apparatus, for example, the transceiver 1310 is configured to receive a PPDU, and the processor 1320 is further configured to parse the PPDU.

For another example, the transceiver 1310 is configured to receive a trigger frame, and send the PPDU. In this case, the processor 1320 may be configured to parse the trigger frame, and generate the PPDU.

In the foregoing embodiments, for specific descriptions of terms such as the PPDU, the trigger frame, the partial-bandwidth MU-MIMO transmission mode, the first indication information, the second indication information, the third indication information, the U-SIG field, and the first SIG field or steps, refer to the descriptions in the foregoing method embodiments. Details are not described herein again.

In each implementation of the communication apparatus shown in FIG. 13a, the transceiver may include a receiver and a transmitter. The receiver is configured to perform a function (or an operation) of receiving, and the transmitter is configured to perform a function (or an operation) of transmitting. The transceiver is configured to communicate with another device/apparatus through a transmission medium.

Optionally, the communication apparatus 130 may further include one or more memories 1330, configured to store program instructions and/or data. The memory 1330 is coupled to the processor 1320. Coupling in embodiments of this application is indirect coupling or communication connection between apparatuses, units, or modules, and may be in an electrical, mechanical, or another form, and is used for information exchange between the apparatuses, units, or modules. The processor 1320 may cooperate with the memory 1330. The processor 1320 may execute the program instructions stored in the memory 1330. Optionally, at least one of the one or more memories may be included in the processor.

A specific connection medium between the transceiver 1310, the processor 1320, and the memory 1330 is not limited in this embodiment of this application. In this embodiment of this application, the memory 1330, the processor 1320, and the transceiver 1310 are connected through a bus 1340 in FIG. 13a, and the bus is represented by a thick line in FIG. 13a. A connection manner between other components is schematically described, and is not limited thereto. The bus may be classified into an address bus, a data bus, a control bus, and the like. For ease of representation, only one bold line is used to represent the bus in FIG. 13a, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method with reference to embodiments of this application may be directly performed and completed by a hardware processor, or may be performed and completed by using a combination of hardware and software modules in the processor, or the like.

In embodiments of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this is not limited. The memory in embodiments of this application may alternatively be a circuit or any other apparatus that can implement a storage function, and is configured to store the program instructions and/or the data.

The processor 1320 is mainly configured to: process a communication protocol and communication data, control the entire communication apparatus, execute a software program, and process data of the software program. The memory 1330 is mainly configured to store the software program and the data. The transceiver 1310 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1320 may read a software program in the memory 1330, explain and execute instructions of the software program, and process data of the software program. When data needs to be sent in a wireless manner, after performing baseband processing on to-be-sent data, the processor 1320 outputs a baseband signal to the radio frequency circuit. After performing radio frequency processing on the baseband signal, the radio frequency circuit sends a radio frequency signal through an antenna in a form of an electromagnetic wave. When data is sent to the communication apparatus, the radio frequency circuit receives the radio frequency signal through the antenna, converts the radio frequency signal into a baseband signal, and outputs the baseband signal to the processor 1320. The processor 1320 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 13a, or the like. This is not limited in embodiments of this application. The methods performed by the processor and the transceiver are merely examples. For specific steps performed by the processor and the transceiver, refer to the methods described above.

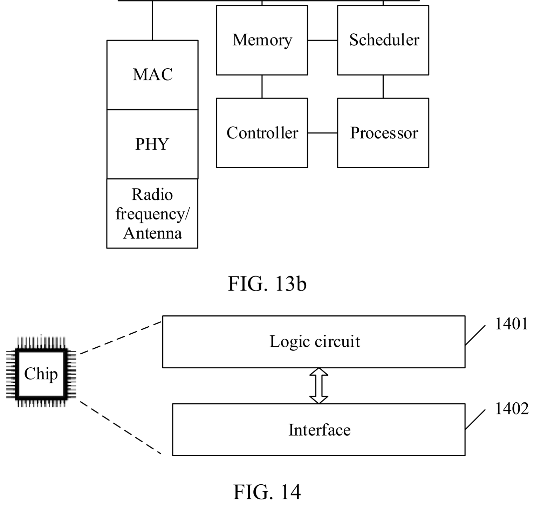

FIG. 13b is a diagram of a structure of a communication apparatus according to an embodiment of this application. As shown in FIG. 13b, the communication apparatus may include the following modules: a medium access control (medium access control, MAC) module, a PHY module, a radio frequency/antenna, a memory, and a processor. The radio frequency/antenna may be configured to perform steps related to receiving/sending operations in the methods shown above. The memory may be configured to store signaling, data, or the like. The processor may be configured to perform steps related to processing operations in the methods shown above. For specific descriptions of the communication apparatus shown in FIG. 13b, refer to FIG. 13a. In Wi-Fi, the MAC layer and the PHY layer are focused. Therefore, FIG. 13b shows examples of the MAC module and the PHY module.

In another possible implementation, in the communication apparatus shown in FIG. 12, the processing unit 1201 may be one or more logic circuits, and the transceiver unit 1202 may be an input/output interface, which is also referred to as a communication interface, an interface circuit, an interface, or the like. Alternatively, the transceiver unit 1202 may be a sending unit and a receiving unit. The sending unit may be an output interface, and the receiving unit may be an input interface. Alternatively, the sending unit and the receiving unit are integrated into one unit, for example, an input/output interface. As shown in FIG. 14, the communication apparatus shown in FIG. 14 includes a logic circuit 1401 and an interface 1402. In other words, the processing unit 1201 may be implemented by using the logic circuit 1401, and the transceiver unit 1202 may be implemented by using the interface 1402. The logic circuit 1401 may be a chip, a processing circuit, an integrated circuit, a system on chip (system on chip, SoC), or the like. The interface 1402 may be a communication interface, an input/output interface, a pin, or the like. For example, FIG. 14 shows an example in which the communication apparatus is a chip. The chip includes the logic circuit 1401 and the interface 1402.

In embodiments of this application, the logic circuit may be further coupled to the interface. A specific manner of connection between the logic circuit and the interface is not limited in this embodiment of this application.

For example, when the communication apparatus is configured to perform the methods, the functions, or the steps performed by the first communication apparatus, for example, the logic circuit 1401 is configured to generate a PPDU, and the interface 1402 is configured to output the PPDU.

For another example, the logic circuit 1401 is configured to generate a trigger frame, and the interface 1402 is configured to output the trigger frame. The interface 1402 is further configured to input the PPDU, and the logic circuit 1401 is configured to parse the PPDU.

For example, when the communication apparatus is configured to perform the methods, the functions, or the steps performed by the second communication apparatus, for example, the interface 1402 is configured to input a PPDU, and the logic circuit 1401 is configured to parse the PPDU.

For another example, the interface 1402 is configured to input a trigger frame, and the logic circuit 1401 is configured to parse the trigger frame. The logic circuit 1401 may further generate the PPDU based on the trigger frame. The interface 1402 may be further configured to output the PPDU.

The communication apparatus shown in this embodiment of this application may implement the methods provided in embodiments of this application in a form of hardware, or may implement the methods provided in embodiments of this application in a form of software. This is not limited in this embodiment of this application.

In the foregoing embodiments, for specific descriptions of terms such as the PPDU, the trigger frame, the partial-bandwidth MU-MIMO transmission mode, the first indication information, the second indication information, the third indication information, the U-SIG field, and the first SIG field or steps, refer to the descriptions in the foregoing method embodiments. Details are not described herein again.

For specific implementations of embodiments shown in FIG. 14, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on an actual requirement to implement technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a readable storage medium and includes several instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
generating a physical layer protocol data unit PPDU, wherein the PPDU corresponds to at least two target users, the at least two target users comprise a first user and a second user, the first user performs multi-user multiple-input multiple-output MU-MIMO transmission with the second user over a first bandwidth, and the first bandwidth is a partial bandwidth of a bandwidth used by the first user for data transmission; and
sending the PPDU.

2. A communication method, wherein the method comprises:
receiving a physical layer protocol data unit PPDU, wherein the PPDU corresponds to at least two target users, the at least two target users comprise a first user and a second user, the first user performs multi-user multiple-input multiple-output MU-MIMO transmission with the second user over a first bandwidth, and the first bandwidth is a partial bandwidth of a bandwidth used by the first user for data transmission; and
parsing the PPDU.

3. The method according to claim 1 or 2, wherein the PPDU comprises a universal signaling U-SIG field, the U-SIG field comprises first indication information, and the first indication information indicates that a transmission mode of the PPDU is a partial-bandwidth MU-MIMO transmission mode.

4. The method according to claim 3, wherein the first indication information is carried in a PPDU type and compression mode field in the U-SIG field.

5. The method according to any one of claims 1 to 4, wherein the PPDU comprises a first signaling SIG field, the first SIG field comprises second indication information, and the second indication information indicates at least one of a size and a location of the first bandwidth.

6. The method according to claim 5, wherein the second indication information comprises a first bitmap, 1 bit in the first bitmap corresponds to one unit bandwidth, and a size of the unit bandwidth is less than or equal to the size of the first bandwidth.

7. The method according to claim 5, wherein the second indication information comprises 1 bit, and the 1 bit indicates that the size of the first bandwidth is 80 MHz or 160 MHz.

8. The method according to claim 7, wherein the location of the first bandwidth is primary 80 MHz or primary 160 MHz, or the location of the first bandwidth is preset.

9. The method according to claim 5, wherein the second indication information comprises at least 1 bit, and the at least 1 bit indicates a resource unit RU or multi-resource unit MRU corresponding to the first bandwidth.

10. The method according to claim 5, wherein the second indication information is carried in a resource unit allocation field, and the resource unit allocation field indicates the size and the location of the first bandwidth.

11. The method according to any one of claims 5 to 10, wherein the first SIG field further comprises user type indication information, and the user type indication information indicates that a user type of the target user is a full-bandwidth user or a partial-bandwidth user.

12. The method according to any one of claims 1 to 11, wherein the at least two target users further comprise a third user, the first user performs MU-MIMO transmission with the third user over a second bandwidth, and the second bandwidth is a partial bandwidth of the bandwidth used by the first user for data transmission other than the first bandwidth.

13. The method according to claim 12, wherein the PPDU comprises the first signaling SIG field, the first SIG field comprises third indication information, and the third indication information indicates at least one of a size and a location of the second bandwidth.

14. The method according to claim 12 or 13, wherein the first user corresponds to one user field on the first bandwidth and one user field on the second bandwidth.

15. The method according to claim 14, wherein the first SIG field comprises at least two user field groups, the user field group comprises at least two user fields, and target users corresponding to the at least two user fields in the user field group perform MU-MIMO transmission over a same bandwidth.

16. The method according to claim 15, wherein the at least two user field groups are arranged in ascending order of frequencies, and the at least two user fields in the user field group are arranged in descending order of numbers of spatial streams.

17. The method according to any one of claims 11 to 16, wherein the user type indication information comprises a second bitmap, a length of the second bitmap is equal to M, and M is a total number of target users or M is a total number of user fields comprised in the first SIG field.

18. The method according to any one of claims 2 to 17, wherein the parsing the PPDU comprises:
parsing the U-SIG field in the PPDU, and identifying that the transmission mode of the PPDU is the partial-bandwidth MU-MIMO transmission mode; and
parsing the first SIG field in the PPDU, to obtain at least one of the size and the location of the first bandwidth, and identifying, based on a user identifier, a user field that corresponds to the user identifier and that is in the first SIG field, and that a user type corresponding to the user identifier is a full-bandwidth user or a partial-bandwidth user.

19. A communication apparatus, comprising a unit configured to perform the method according to any one of claims 1 to 18.

20. A communication apparatus, comprising a processor, wherein the processor is configured to perform the method according to any one of claims 1 to 18.

21. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 18.

22. A computer-readable storage medium, wherein the computer-readable storage medium is configured to store a computer program, and when the computer program is executed, the method according to any one of claims 1 to 18 is performed.

23. A communication system, wherein the communication system comprises a first communication apparatus and a second communication apparatus, the first communication apparatus is configured to perform the method according to any one of claims 1 and 3 to 17, and the second communication apparatus is configured to perform the method according to any one of claims 2 to 18.
